# EUROPEAN PATENT SPECIFICATION

(11) **EP 4 117 206 B1**
(45) Date of publication and mention of the grant of the patent: **04.03.2026**
(21) Application number: 21783846.5
(22) Date of filing: 26.03.2021
(51) Int. Cl.: H04J 3/06, H04W 56/00, H04J 3/12, H04W 28/00, H04W 52/00, H04W 52/02

(54) **METHOD AND APPARATUS FOR PROCESSING TIME SYNCHRONIZATION PACKET**
VERFAHREN UND VORRICHTUNG ZUR VERARBEITUNG EINES ZEITSYNCHRONISATIONSPAKETS
PROCÉDÉ ET APPAREIL DE TRAITEMENT DE PAQUET DE SYNCHRONISATION TEMPORELLE

(30) Priority: 09.04.2020 CN 202010275258
(43) Date of publication of application: 11.01.2023
(73) Proprietor: Huawei Technologies Co., Ltd., Longgang Shenzhen, Guangdong 518129 (CN)
(72) Inventor: QIANG, Li, Shenzhen, Guangdong 518129 (CN); YU, Fang, Shenzhen, Guangdong 518129 (CN); LI, Yongcui, Shenzhen, Guangdong 518129 (CN)
(74) Representative: Thun, Clemens
(86) International application number: PCT/CN2021/083141
(87) International publication number: WO 2021/203983

(56) References cited:
- EP-A1- 3 609 248
- EP-A1- 3 836 639
- EP-A1- 3 941 109
- EP-A1- 4 009 549
- EP-A1- 4 009 550
- WO-A1-2020/063420
- CN-A- 106 549 724
- CN-A- 107 528 655
- CN-A- 110 611 924
- CN-A- 110 636 547
- CN-A- 110 831 144
- US-A1- 2014 085 136
- US-A1- 2014 085 136
- US-A1- 2016 345 279
- "3rd Generation Partnership Project; Technical Specification Group Services and System Aspects; Procedures for the 5G System; Stage 2 (Release 16)", 19 December 2019 (2019-12-19), XP051867065, Retrieved from the Internet <URL:https://ftp.3gpp.org/tsg_sa/WG2_Arch/Latest_SA2_Specs/DRAFT_INTERIM/Archive/23502-g30_CRs_Implemented.zip 23502-g30CRs_Implemented.doc> [retrieved on 20191219]
- TENCENT: "TSN Time Synchronization Traffic Handling", 3GPP DRAFT; S2-1907140 TS23.501 R16 TSN TSN TIME SYNCHRONIZATION TRAFFIC HANDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sapporo, Japan; 20190624 - 20190628, 18 June 2019 (2019-06-18), Mobile Competence Centre ; 650, route des Lucioles ; F-06921 Sophia-Antipolis Cedex ; France , XP051752113
- HUAWEI, HISILICON: "Key Issue: gPTP Message Processing for TSN Time Synchronization from UE", 3GPP DRAFT; S2-1909464 - KI GPTP MESSAGE PROCESSING FOR TSN TIME SYNCHRONIZATION FROM UE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Split, Croatia; 20191014 - 20191018, 4 October 2019 (2019-10-04), Mobile Competence Centre ; 650, route des Lucioles ; F-06921 Sophia-Antipolis Cedex ; France , XP051795566

## Description

### TECHNICAL FIELD

This application relates to the communication field, and more specifically, to a time synchronization packet processing method and apparatus

### BACKGROUND

Time synchronization is a basis for implementing communication reliability and accuracy. Currently, in a known technology, two communication parties perform time synchronization based on a packet (namely, a time synchronization packet) carrying information about a same clock source, for example, a grant master (Grant Master, GM).

With development of communication technologies, communication services are diversified, and different services have different requirements on time synchronization precision. Therefore, in a known technology, a communication device (for example, a terminal device) has a capability of performing time synchronization based on a plurality of clock sources, so that different clock sources are used for synchronization based on different service requirements.

In this case, the communication device needs to maintain a time synchronization packet of each clock source. Consequently, power consumption of the communication device is increased, and performance of the communication device is affected.

Further, EP 3 609 248 A1 refers to a communication method and a communications device. The method includes: obtaining, by a first communications device, authorization information, where the authorization information indicates that a second communications device is a device that needs to perform time synchronization; and providing, by the first communications device, time information for the second communications device based on the authorization information; or obtaining, by the first communications device, authorization information, where the authorization information indicates that the second communications device is not a device that needs to perform time synchronization; and skipping, by the first communications device, providing time information for the second communications device based on the authorization information, to avoid broadcasting the time information to all communications devices, so that a time synchronization service can be provided for a specific communications device.

Further, WO 2020/063420 A1 refers to the field of communications, and provides a synchronization cycle determination method, device and system for determining a reasonable synchronization cycle, The method comprises: a network device acquires a crystal-oscillator frequency drift f1 of UE; the network device acquires a crystal-oscillator frequency drift f2 of an AN; the network device acquires a service synchronization accuracy requirement t of the UE; and the network device calculates, according to the acquired f1, f2 and t, a synchronization cycle for performing clock synchronization between the UE and the AN. EP 4 009 549 A1 (TENCENT TECH SHENZHEN CO LTD [CN]) 8 June 2022 (2022-06-08) and EP 4 009 550 A1 (TENCENT TECH SHENZHEN CO LTD [CN]) 8 June 2022 (2022-06-08) are prior art under Art. 54(3) EPC.

### SUMMARY

This application provides a time synchronization packet processing method and apparatus, to reduce power consumption of a communication device and improve performance of the communication device while meeting time synchronization precision required by a service. The above mentioned problem is solved by the subject matter of the independent claims. Further implementation forms are provided in the dependent claims.

According to a first aspect, a time synchronization packet processing method is provided. The method includes: A terminal device receives first indication information, where the first indication information indicates the terminal device to enter an activation state of time synchronization for a first clock source, or the first indication information indicates the terminal device to enter a deactivation state of time synchronization; and processes a time synchronization packet of the first clock source based on the first indication information.

A first processing manner is different from a second processing manner. The first processing manner is a manner in which the terminal device processes the clock synchronization packet of the first clock source when the time synchronization of the first clock source is in the activation state, and the second processing manner is a manner in which the terminal device processes the clock synchronization packet of the first clock source when the time synchronization of the first clock source is in the deactivation state.

According to the solution provided in this application, the terminal device processes a time synchronization packet of a clock source in different manners when the clock source is activated and deactivated, and indicates, by using signaling, whether the clock source is activated or deactivated, so that the terminal device can perform processing in different manners. For example, when the clock source is deactivated, the terminal device does not need to perform processing that needs to be performed when the clock source is activated. Therefore, power consumption of a communication device can be reduced and performance of the communication device can be improved while meeting time synchronization precision required by a service.

In this application, "the first indication information indicates the terminal device to enter an activation (activation) state of time synchronization for a first clock source" may be understood as follows: The first indication information indicates the terminal device to activate (activate) the first clock source, or the first indication information indicates the terminal device to activate the time synchronization for the first clock source, or the first indication information indicates the terminal device to enable (enable) a capability of the time synchronization for the first clock source, or the first indication information includes an activation request (activation request) for the first clock source.

In addition, "the first indication information indicates the terminal device to enter a deactivation (deactivation) state of time synchronization" may be understood as follows: The first indication information indicates the terminal device to deactivate (deactivate) the first clock source, or the first indication information indicates the terminal device to deactivate the time synchronization for the first clock source, or the first indication information indicates the terminal device to disable (disable) the capability of the time synchronization for the first clock source, or the first indication information includes a deactivation request (deactivation request) for the first clock source.

For example, when the first indication information indicates to enter the activation state, that the terminal device processes a time synchronization packet of the first clock source based on the first indication information includes: generating the time synchronization packet of the first clock source based on the first indication information, and sending the time synchronization packet of the first clock source to an external device.

When the first indication information indicates to enter the deactivation state, that the terminal device processes a time synchronization packet of the first clock source based on the first indication information includes: stopping generating (or not needing to generate) the time synchronization packet of the first clock source based on the first indication information.

For another example, when the first indication information indicates to enter the activation state, that the terminal device processes a time synchronization packet of the first clock source based on the first indication information includes: receiving the time synchronization packet of the first clock source based on the first indication information, updating information carried in the time synchronization packet of the first clock source, and sending an updated time synchronization packet of the first clock source to an external device.

When the first indication information indicates to enter the deactivation state, that the terminal device processes a time synchronization packet of the first clock source based on the first indication information includes: transparently transmitting the time synchronization packet of the first clock source to, for example, an external device or a DS-TT based on the first indication information.

Herein, transparent transmission may be understood as that when receiving the time synchronization packet of the first clock source, the terminal device does not update the time information carried in the time synchronization packet, but directly sends the time synchronization packet of the first clock source to a next-hop device.

For another example, when the first indication information indicates to enter the deactivation state, that the terminal device processes a time synchronization packet of the first clock source based on the first indication information includes: discarding the time synchronization packet of the first clock source (for example, the time synchronization packet of the first clock source that is received from a UPF) based on the first indication information.

For another example, when the first indication information indicates to enter the activation state, that the terminal device processes a time synchronization packet of the first clock source based on the first indication information includes: initiating establishment of a first quality of service flow QoS flow based on the first indication information, where the first QoS flow is used to transmit the time synchronization packet of the first clock source.

When the first indication information indicates to enter the deactivation state, that the terminal device processes a time synchronization packet of the first clock source based on the first indication information includes: deleting (or clearing, releasing) the first QoS flow based on the first indication information, where the first QoS flow is used to transmit the time synchronization packet of the first clock source.

For another example, when the first indication information indicates to enter the activation state, that the terminal device processes a time synchronization packet of the first clock source based on the first indication information includes: keeping the time synchronization of the first clock source, or performing the time synchronization of the first clock source based on the time synchronization packet of the first clock source.

For another example, when the first indication information indicates to enter the deactivation state, that the terminal device processes a time synchronization packet of the first clock source based on the first indication information includes: stopping the time synchronization of the first clock source, or stopping performing the time synchronization of the first clock source based on the time synchronization packet of the first clock source.

For another example, when the first indication information indicates to enter the activation state, that the terminal device processes a time synchronization packet of the first clock source based on the first indication information includes: obtaining, from a positioning system, time information for generating the time synchronization packet of the first clock source.

When the first indication information indicates to enter the deactivation state, that the terminal device processes a time synchronization packet of the first clock source based on the first indication information includes: stopping obtaining (in other words, not needing to obtain), from the positioning system, the time information for generating the time synchronization packet of the first clock source.

In this application, the term "stop" may also be understood as "prohibit" or "suspend". Descriptions of same or similar cases are omitted below.

In this application, the foregoing processing manner in the activation state or the deactivation state may be specified by a communication system or a communication protocol.

Alternatively, the foregoing processing manner in the activation state or the deactivation state may be set in the terminal device by a device manufacturer or an operator.

Therefore, the foregoing processing manner in the activation state or the deactivation state does not need to be indicated by a network device, so that signaling overheads can be reduced.

Optionally, when the first indication information indicates to enter the activation state, the first indication information further indicates the first processing manner. The first processing manner includes at least one of the following processing manners:
Manner a: generating and sending the time synchronization packet of the first clock source to the external device;
Manner b: receiving the time synchronization packet of the first clock source, updating the information carried in the time synchronization packet of the first clock source, and sending the updated time synchronization packet of the first clock source to the external device;
Manner c: initiating establishment of the first quality of service flow QoS flow, where the first QoS flow is used to transmit the time synchronization packet of the first clock source;
Manner d: obtaining, from the positioning system, the time information for generating the time synchronization packet of the first clock source; and
Manner j: keeping the time synchronization of the first clock source, or performing the time synchronization of the first clock source based on the clock packet of the first clock source.

Optionally, when the first indication information indicates to enter the deactivation state, the first indication information further indicates the second processing manner. The second processing manner includes at least one of the following processing manners:
Manner e: stopping generating the time synchronization packet of the first clock source;
Manner f: transparently transmitting the time synchronization packet of the first clock source;
Manner g: deleting the first QoS flow, where the first QoS flow is used to transmit the time synchronization packet of the first clock source;
Manner h: stopping obtaining, from the positioning system, the time information for generating the time synchronization packet of the first clock source;
Manner k: stop keeping the time synchronization of the first clock source, or stop performing the time synchronization of the first clock source based on the clock packet of the first clock source; and
Manner m: discarding the time synchronization packet of the first clock source, for example, discarding the time synchronization packet of the first clock source that is received from the UPF.

That is, in this application, the processing manner in the activation state or the deactivation state may be indicated by the network device, so that storage overheads of the terminal device caused by storing the processing manners can be reduced.

Optionally, the first clock source includes a clock source of an internal system.

The internal system may be understood as a communication system on which the terminal device currently camps.

Optionally, the first clock source includes a clock source of an external system.

The external system may be understood as a system other than the communication system on which the terminal device currently camps.

Optionally, the first clock source includes a clock source of a fifth generation 5G system or a sixth generation 6G system; or
the first clock source includes a clock source of a time sensitive network TSN.

It should be understood that the foregoing first clock source is merely an example for description, and is not particularly limited in this application. A clock source of another system falls within the protection scope of this application.

Optionally, the time synchronization packet of the first clock source includes a generalized precision time protocol gPTP packet.

Optionally, the time synchronization packet of the first clock source includes a precision time protocol PTP packet.

It should be noted that the time synchronization packet may be appropriately changed based on a system to which this application is applied. This is not particularly limited in this application.

Optionally, the first indication information includes an identifier of the terminal device, an identifier of the first clock source, and a first indication; and the first indication indicates the activation state, or the first indication indicates the deactivation state.

The first indication may correspond to a preset field or domain in the first indication information.

In addition, the first indication (Indication) may include two optional values, for example, on (on) and off (off). One value (for example, on) corresponds to the activation state, and the other value (for example, off) corresponds to the deactivation state, so that the terminal device can determine to enter the activation state or the deactivation state based on the first indication.

By way of example and not limitation, the identifier of the terminal device may include but is not limited to a mobile phone number of the terminal device, a device identifier of the terminal device, an internet protocol address of the terminal device, and the like.

Optionally, the first indication information includes a port number of a first port, and the first port includes a port for transmitting the time synchronization packet of the first clock source.

By way of example and not limitation, the first port may include all ports corresponding to the terminal device.

Alternatively, the first port may include some or all of a plurality of ports configured to transmit the time synchronization packet of the first clock source.

Optionally, the first indication information includes an identifier of a first application service entity, where the first application service entity is configured to provide a first service for the terminal device, and the first service is based on the time synchronization of the first clock source.

Optionally, when the first clock source includes the clock source of the external system, if the first indication information indicates to enter the activation state, the method further includes: keeping, based on the first indication information, the time synchronization based on the first clock source.

Optionally, when the first clock source includes the clock source of the external system, if the first indication information indicates to enter the deactivation state, the method further includes: stopping keeping, based on the first indication information, the time synchronization based on the first clock source.

According to a second aspect, a time synchronization packet processing method is provided. The method includes: A network device generates first indication information, where the first indication information indicates a terminal device to enter an activation state of time synchronization for a first clock source, or the first indication information indicates a terminal device to enter a deactivation state of time synchronization; and sends the first indication information.

A first processing manner is different from a second processing manner. The first processing manner is a manner in which the terminal device processes a clock synchronization packet of the first clock source when the time synchronization of the first clock source is in the activation state, and the second processing manner is a manner in which the terminal device processes the clock synchronization packet of the first clock source when the time synchronization of the first clock source is in the deactivation state.

According to the solution provided in this application, the terminal device processes a time synchronization packet of a clock source in different manners when the clock source is activated and deactivated, and indicates, by using signaling, whether the clock source is activated or deactivated, so that the terminal device can perform processing in different manners. For example, when the clock source is deactivated, the terminal device does not need to perform processing that needs to be performed when the clock source is activated. Therefore, power consumption of a communication device can be reduced and performance of the communication device can be improved while meeting time synchronization precision required by a service.

Optionally, the first indication information includes an identifier of the terminal device, an identifier of the first clock source, and a first indication; and the first indication indicates the activation state, or the first indication indicates the deactivation state.

The first indication may correspond to a preset field or domain in the first indication information.

In addition, the first indication (Indication) may include two optional values, for example, on (on) and off (off). One value (for example, on) corresponds to the activation state, and the other value (for example, off) corresponds to the deactivation state, so that the terminal device can determine to enter the activation state or the deactivation state based on the first indication.

By way of example and not limitation, the identifier of the terminal device may include but is not limited to a mobile phone number of the terminal device, a device identifier of the terminal device, an internet protocol address of the terminal device, and the like.

Optionally, the first indication information includes a port number of a first port, and the first port includes a port for transmitting the time synchronization packet of the first clock source.

By way of example and not limitation, the first port may include all ports corresponding to the terminal device.

Alternatively, the first port may include some or all of a plurality of ports configured to transmit the time synchronization packet of the first clock source.

Optionally, the first indication information includes an identifier of a first application service entity, where the first application service entity is configured to provide a first service for the terminal device, and the first service is based on the time synchronization of the first clock source.

Optionally, when the first indication information indicates to enter the activation state,
the first indication information indicates the terminal device to generate and send the time synchronization packet of the first clock source to an external device;
the first indication information indicates the terminal device to receive the time synchronization packet of the first clock source, update information carried in the time synchronization packet of the first clock source, and send an updated time synchronization packet of the first clock source to an external device;
the first indication information indicates the terminal device to establish a first quality of service flow QoS flow, where the first QoS flow is used to transmit the time synchronization packet of the first clock source;
the first indication information indicates the terminal device to obtain, from a positioning system, time information for generating the time synchronization packet of the first clock source; or
the first indication information indicates the terminal device to keep the time synchronization of the first clock source, in other words, perform the time synchronization of the first clock source based on the time synchronization packet of the first clock source.

Optionally, when the first indication information indicates to enter the deactivation state,
the first indication information indicates the terminal device to stop generating the time synchronization packet of the first clock source;
the first indication information indicates the terminal device to transparently transmit the time synchronization packet of the first clock source to the external device;
the first indication information indicates the terminal device to delete the first QoS flow, where the first QoS flow is used to transmit the time synchronization packet of the first clock source;
the first indication information indicates the terminal device to stop obtaining, from the positioning system, the time information for generating the time synchronization packet of the first clock source;
the first indication information indicates the terminal device to discard the time synchronization packet of the first clock source (for example, the time synchronization packet of the first clock source that is received from a UPF); or
the first indication information indicates the terminal device to stop the time synchronization of the first clock source, in other words, stop performing the time synchronization of the first clock source based on the time synchronization packet of the first clock source.

Optionally, the first clock source includes a clock source of an internal system; or
the first clock source includes a clock source of an external system.

Optionally, the first clock source includes a clock source of a fifth generation 5G system; or
the first clock source includes a clock source of a time sensitive network TSN.

Optionally, the time synchronization packet of the first clock source includes a generalized precision time protocol gPTP packet.

Optionally, the method further includes: recording an activation status of the first clock source in the terminal device, where the activation status includes the activation state or the deactivation state.

Optionally, the method further includes: receiving second indication information, where the second indication information requests to activate the first clock source of the terminal device, or the second indication information requests to deactivate the first clock source of the terminal device; and
that a network device generates first indication information includes:
generating the first indication information based on the second indication information.

Optionally, the generating the first indication information based on the second indication information includes:
generating the first indication information based on the second indication information and the activation status of the first clock source in the terminal device, where the activation status includes the activation state or the deactivation state.

For example, if the second indication information requests to activate the first clock source in the terminal device, and the activation status of the first clock source in the terminal device is the deactivation state, the first indication information is generated. The first indication information indicates the terminal device to enter the activation state of the time synchronization for the first clock source.

For another example, if the second indication information requests to activate the first clock source in the terminal device, and the second indication information is the first piece of information that is received by the network device and that requests to activate the time synchronization for the first clock source of the terminal device, the first indication information is generated. The first indication information indicates the terminal device to enter the activation state of the time synchronization for the first clock source.

For another example, if the second indication information requests to deactivate the first clock source in the terminal device, and the activation status of the first clock source in the terminal device is the activation state, the first indication information is generated. The first indication information indicates the terminal device to enter the deactivation state of the time synchronization for the first clock source.

For another example, if the second indication information requests to deactivate the first clock source in the terminal device, the activation status of the first clock source in the terminal device is the activation state, and no AF other than an AF that sends the second indication information provides a service for the terminal device based on the first clock source, the first indication information is generated. The first indication information indicates the terminal device to enter the deactivation state of the time synchronization for the first clock source.

Optionally, the method further includes: receiving the second indication information, where the second indication information requests to activate the time synchronization of the first clock source of the terminal device, or the second indication information requests to deactivate the time synchronization of the first clock source of the terminal device; and
processing the first QoS flow based on the second indication information, where the first QoS flow is used by the first terminal device to transmit the time synchronization packet of the first clock source.

For example, when the second indication information requests to activate the time synchronization of the first clock source of the terminal device, the first QoS flow is established based on the second indication information, where the first QoS flow is used by the first terminal device to transmit the time synchronization packet of the first clock source.

For another example, when the second indication information requests to deactivate the time synchronization of the first clock source of the terminal device, the first QoS flow is deleted based on the second indication information.

Optionally, the processing the first QoS flow based on the second indication information includes: processing the first QoS flow based on the second indication information and the status of the first clock source in the first terminal device.

For example, if the second indication information is the first piece of information that is received by the network device and that requests to activate the time synchronization of the first clock source of the terminal device, the first QoS flow is established, where the first QoS flow is used by the first terminal device to transmit the time synchronization packet of the first clock source.

In other words, if the second indication information requests to activate the time synchronization of the first clock source of the terminal device, and the first clock source is in the deactivation state in the terminal device, the first QoS flow is established.

For another example, if the second indication information requests to deactivate the time synchronization of the first clock source of the terminal device, and an application service entity AF that sends the second indication information is the last AF that provides the service for the terminal device based on the first clock source, the first QoS flow is deleted.

In other words, if the second indication information requests to deactivate the time synchronization of the first clock source of the terminal device, and no other AF other than the AF that sends the second indication information provides the service for the terminal device based on the first clock source, the first QoS flow is deleted.

Optionally, that the network device generates the first indication information includes: The network device generates the first indication information based on the second indication information.

Optionally, that the network device generates the first indication information based on the second indication information includes: The network device generates the first indication information based on the second indication information and the status of the first clock source in the first terminal device.

Optionally, that the network device generates the first indication information based on the second indication information and the status of the first clock source in the first terminal device includes:
if the second indication information is the first piece of information that is received by the network device and that requests to activate the time synchronization of the first clock source of the terminal device, generating the first indication information that indicates the terminal device to enter the activation state of the time synchronization for the first clock source.

Optionally, that the network device generates the first indication information based on the second indication information and the status of the first clock source in the first terminal device includes:
if the second indication information requests to deactivate the time synchronization of the first clock source of the terminal device, and the application service entity AF that sends the second indication information is the last AF that provides the service for the terminal device based on the first clock source, generating the first indication information that indicates the terminal device to enter the deactivation state of the time synchronization for the first clock source.

Optionally, the second indication information includes the identifier of the terminal device, the identifier of the first clock source, and a second indication; and the second indication indicates the activation state, or the second indication indicates the deactivation state.

The second indication may correspond to a preset field or domain in the second indication information.

In addition, the second indication (Indication) may include two optional values, for example, on (on) and off (off). One value (for example, on) corresponds to the activation state, and the other value (for example, off) corresponds to the deactivation state, so that the network device can determine to enter the activation state or the deactivation state based on the second indication.

Optionally, the second indication information is sent by a first application service entity, and the second indication information includes an identifier of the first application service entity.

Optionally, the network device includes a session management function (Session Management Function, SMF) entity.

Optionally, the network device includes a network exposure function (Network Exposure Function, NEF) entity.

Optionally, the network device includes an access and management function (access and mobility management function, AMF) entity.

Optionally, the network device includes a policy control function (Policy Control Function, PCF) entity.

Optionally, when the first clock source includes the clock source of the external system, if the first indication information indicates to enter the activation state, the first indication information further indicates the terminal device to keep the time synchronization of the first clock source.

Optionally, when the first clock source includes the clock source of the external system, if the first indication information indicates to enter the deactivation state, the first indication information further indicates the terminal device to stop the time synchronization of the first clock source.

According to a third aspect, a time synchronization method is provided. The method includes: A terminal device receives first indication information, where the first indication information indicates a manner of processing a time synchronization packet of a first clock source; and
processes the time synchronization packet of the first clock source based on the first indication information.

Optionally, the processing manner includes at least one of the following processing manners:
Manner a: generating and sending the time synchronization packet of the first clock source to an external device;
Manner b: receiving the time synchronization packet of the first clock source, updating information carried in the time synchronization packet of the first clock source, and sending an updated time synchronization packet of the first clock source to the external device;
Manner c: establishing a first quality of service flow QoS flow, where the first QoS flow is used to transmit the time synchronization packet of the first clock source;
Manner d: obtaining, from a positioning system, time information for generating the time synchronization packet of the first clock source; and
Manner j: keeping time synchronization of the first clock source, or performing time synchronization based on the time synchronization packet of the first clock source.

Alternatively, the processing manner includes at least one of the following processing manners:
Manner e: stopping generating the time synchronization packet of the first clock source;
Manner f: transparently transmitting the time synchronization packet of the first clock source (for example, to the external device);
Manner g: deleting the first QoS flow, where the first QoS flow is used to transmit the time synchronization packet of the first clock source;
Manner h: stopping obtaining, from the positioning system, the time information for generating the time synchronization packet of the first clock source;
Manner k: discarding the time synchronization packet of the first clock source (for example, the time synchronization packet of the first clock source that is received from a UPF); and
Manner m: stopping the time synchronization of the first clock source, or stopping performing the time synchronization based on the time synchronization packet of the first clock source.

According to the solution provided in this application, a network device configures the manner of processing the time packet of the clock source for the terminal device, so that the manner of processing the time synchronization packet by the terminal device can be flexibly adjusted based on an actual use status. Therefore, power consumption of a communication device can be reduced and performance of the communication device can be improved while meeting time synchronization precision required by a service.

Optionally, the first indication information includes an identifier of the terminal device, an identifier of the first clock source, and a first indication; and the first indication indicates an activation state, or the first indication indicates a deactivation state.

The first indication may correspond to a preset field or domain in the first indication information.

In addition, the first indication (Indication) may include two optional values, for example, on (on) and off (off). One value (for example, on) corresponds to the activation state, and the other value (for example, off) corresponds to the deactivation state, so that the terminal device can determine to enter the activation state or the deactivation state based on the first indication.

By way of example and not limitation, the identifier of the terminal device may include but is not limited to a mobile phone number of the terminal device, a device identifier of the terminal device, an internet protocol address of the terminal device, and the like.

Optionally, the first indication information includes a port number of a first port, and the first port includes a port for transmitting the time synchronization packet of the first clock source.

By way of example and not limitation, the first port may include all ports corresponding to the terminal device.

Alternatively, the first port may include some or all of a plurality of ports configured to transmit the time synchronization packet of the first clock source.

Optionally, the first indication information includes an identifier of a first application service entity, where the first application service entity is configured to provide a first service for the terminal device, and the first service is based on the time synchronization of the first clock source.

Optionally, when the first clock source includes a clock source of an external system, if the first indication information indicates to enter the activation state, the first indication information further indicates the terminal device to perform the time synchronization based on the first clock source.

Optionally, when the first clock source includes the clock source of the external system, if the first indication information indicates to enter the deactivation state, the first indication information further indicates the terminal device to stop the time synchronization based on the first clock source.

According to a fourth aspect, a time synchronization method is provided. The method includes: A network device sends first indication information, where the first indication information indicates a manner of processing a time synchronization packet for a first clock source GM.

Optionally, the processing manner includes at least one of the following processing manners:
Manner a: generating and sending the time synchronization packet of the first clock source to an external device;
Manner b: receiving the time synchronization packet of the first clock source, updating information carried in the time synchronization packet of the first clock source, and sending an updated time synchronization packet of the first clock source to the external device;
Manner c: establishing a first quality of service flow QoS flow, where the first QoS flow is used to transmit the time synchronization packet of the first clock source;
Manner d: obtaining, from a positioning system, time information for generating the time synchronization packet of the first clock source; and
Manner j: keeping time synchronization of the first clock source, or performing time synchronization based on the time synchronization packet of the first clock source.

Alternatively, the processing manner includes at least one of the following processing manners:
Manner e: stopping generating the time synchronization packet of the first clock source;
Manner f: transparently transmitting the time synchronization packet of the first clock source;
Manner g: deleting the first QoS flow, where the first QoS flow is used to transmit the time synchronization packet of the first clock source;
Manner h: stopping obtaining, from the positioning system, the time information for generating the time synchronization packet of the first clock source;
Manner k: discarding the time synchronization packet of the first clock source (for example, the time synchronization packet of the first clock source that is received from a UPF); and
Manner m: stopping the time synchronization of the first clock source, or stopping performing the time synchronization based on the time synchronization packet of the first clock source.

According to the solution provided in this application, the network device configures the manner of processing the time packet of the clock source for the terminal device, so that the manner of processing the time synchronization packet by the terminal device can be flexibly adjusted based on an actual use status. Therefore, power consumption of a communication device can be reduced and performance of the communication device can be improved while meeting time synchronization precision required by a service.

Optionally, the first indication information includes an identifier of the terminal device, an identifier of the first clock source, and a first indication; and the first indication indicates an activation state, or the first indication indicates a deactivation state.

The first indication may correspond to a preset field or domain in the first indication information.

In addition, the first indication (Indication) may include two optional values, for example, on (on) and off (off). One value (for example, on) corresponds to the activation state, and the other value (for example, off) corresponds to the deactivation state, so that the terminal device can determine to enter the activation state or the deactivation state based on the first indication.

By way of example and not limitation, the identifier of the terminal device may include but is not limited to a mobile phone number of the terminal device, a device identifier of the terminal device, an internet protocol address of the terminal device, and the like.

Optionally, the first indication information includes a port number of a first port, and the first port includes a port for transmitting the time synchronization packet of the first clock source.

By way of example and not limitation, the first port may include all ports corresponding to the terminal device.

Alternatively, the first port may include some or all of a plurality of ports configured to transmit the time synchronization packet of the first clock source.

Optionally, the first indication information includes an identifier of a first application service entity, where the first application service entity is configured to provide a first service for the terminal device, and the first service is based on the time synchronization of the first clock source.

Optionally, the method further includes: recording an activation status of the first clock source in the terminal device, where the activation status includes the activation state or the deactivation state.

Optionally, the method further includes: receiving second indication information, where the second indication information requests to activate the first clock source of the terminal device, or the second indication information requests to deactivate the first clock source of the terminal device; and
that a network device generates first indication information includes:
generating the first indication information based on the second indication information.

Optionally, the generating the first indication information based on the second indication information includes:
generating the first indication information based on the second indication information and the activation status of the first clock source in the terminal device, where the activation status includes the activation state or the deactivation state.

For example, if the second indication information requests to activate the first clock source in the terminal device, and the activation status of the first clock source in the terminal device is the deactivation state, the first indication information is generated. The first indication information indicates at least one processing manner in Manner a, Manner b, Manner c, Manner d, or Manner j.

For another example, if the second indication information requests to deactivate the first clock source in the terminal device, and the activation status of the first clock source in the terminal device is the activation state, the first indication information is generated. The first indication information indicates at least one processing manner in Manner e, Manner f, Manner g, Manner h, Manner k, or Manner m.

For another example, if the second indication information requests to deactivate the first clock source in the terminal device, the activation status of the first clock source in the terminal device is the activation state, and no application function entity requests the terminal device to activate the first clock source, the first indication information is generated. The first indication information indicates at least one processing manner in Manner e, Manner f, Manner g, or Manner h.

Optionally, the method further includes: receiving the second indication information, where the second indication information requests to activate the time synchronization of the first clock source of the terminal device, or the second indication information requests to deactivate the time synchronization of the first clock source of the terminal device;
when the second indication information requests to activate the time synchronization of the first clock source of the terminal device, establishing a first QoS flow based on the second indication information, where the first QoS flow is used by the first terminal device to transmit the time synchronization packet of the first clock source; and
when the second indication information requests to deactivate the time synchronization of the first clock source of the terminal device, deleting the first QoS flow based on the second indication information.

Optionally, the second indication information includes the identifier of the terminal device, the identifier of the first clock source, and a second indication; and the second indication indicates the activation state, or the second indication indicates the deactivation state.

The second indication may correspond to a preset field or domain in the second indication information.

In addition, the second indication (Indication) may include two optional values, for example, on (on) and off (off). One value (for example, on) corresponds to the activation state, and the other value (for example, off) corresponds to the deactivation state, so that the network device can determine to enter the activation state or the deactivation state based on the second indication.

Optionally, the second indication information is sent by a first application service entity, and the second indication information includes an identifier of the first application service entity.

Optionally, the network device includes a session management function (Session Management Function, SMF) entity.

Optionally, the network device includes a network exposure function (Network Exposure Function, NEF) entity.

Optionally, the network device includes an access and management function (access and mobility management function, AMP) entity.

Optionally, the network device includes a policy control function (Policy Control Function, PCF) entity.

Optionally, when the first clock source includes the clock source of the external system, if the first indication information indicates to enter the activation state, the first indication information further indicates the terminal device to perform the time synchronization based on the first clock source.

Optionally, when the first clock source includes the clock source of the external system, if the first indication information indicates to enter the deactivation state, the first indication information further indicates the terminal device to stop the time synchronization based on the first clock source.

According to a fifth aspect, a time synchronization packet processing apparatus is provided, where units in the apparatus are separately configured to perform steps of the communication method in the first aspect or the third aspect and any implementation of the first aspect or the third aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a sixth aspect, a time synchronization packet processing apparatus is provided, where units in the apparatus are separately configured to perform steps of the communication method in the second aspect or the fourth aspect and any implementation of the second aspect or the fourth aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a seventh aspect, a communication device is provided, including a processor and a memory. The memory is configured to store a computer program, and the processor is configured to invoke the computer program from the memory and run the computer program, so that the communication device is enabled to perform the communication method in any one of the first aspect to the fourth aspect and the implementations of these aspects.

Optionally, there are one or more processors, and there are one or more memories.

Optionally, the memory may be integrated with the processor, or the memory and the processor are separately disposed.

Optionally, the communication device further includes a transmitter (transmitter) and a receiver (receiver).

According to an eighth aspect, a communication system is provided, including the communication device provided in the seventh aspect.

In a possible design, the communication system may further include another device that interacts with the communication device in the solutions provided in embodiments of this application.

According to a ninth aspect, a communication system is provided, including the foregoing network device and terminal device.

The terminal device is configured to perform the method in each implementation of the first aspect or the third aspect, and the network device is configured to perform the method in each implementation of the second aspect or the fourth aspect.

In a possible design, the communication system may further include another device that interacts with the network device or the terminal device in the solutions provided in embodiments of this application.

According to a tenth aspect, a computer program product is provided. The computer program product includes a computer program (which may also be referred to as code or instructions). When the computer program runs, a computer is enabled to perform the method in any one of the first aspect to the fourth aspect and the possible implementations of the first aspect to the fourth aspect.

According to an eleventh aspect, a computer-readable medium is provided. The computer-readable medium stores a computer program (which may also be referred to as code or instructions). When the computer program runs on a computer, the computer is enabled to perform the method in any one of the first aspect to the fourth aspect and the possible implementations of the first aspect to the fourth aspect.

According to a twelfth aspect, a chip system is provided, including a memory and a processor. The memory is configured to store a computer program, and the processor is configured to invoke the computer program from the memory and run the computer program, so that a communication device in which the chip system is installed performs the method in any one of the first aspect to the fourth aspect and the possible implementations of the first aspect to the fourth aspect.

The chip system may include an input circuit or interface configured to send information or data, and an output circuit or interface configured to receive information or data.

### BRIEF DESCRIPTION OF DRAWINGS

FIG. 1 is a schematic diagram of an example of a communication system according to this application;
FIG. 2 is a schematic diagram of another example of a communication system according to this application;
FIG. 3 is a schematic interaction diagram of an example of a time synchronization packet processing method according to this application;
FIG. 4 is a schematic interaction diagram of another example of a time synchronization packet processing method according to this application;
FIG. 5 is a schematic interaction diagram of still another example of a time synchronization packet processing method according to this application;
FIG. 6 is a schematic diagram of an example of a time synchronization packet processing apparatus according to this application;
FIG. 7 is a schematic diagram of an example of a time synchronization packet processing apparatus according to this application; and
FIG. 8 is a schematic diagram of an example of a terminal device according to this application.

### DESCRIPTION OF EMBODIMENTS

The following describes the technical solutions in this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a 5th generation (5th generation, 5G) system in the future, or new radio (new radio, NR).

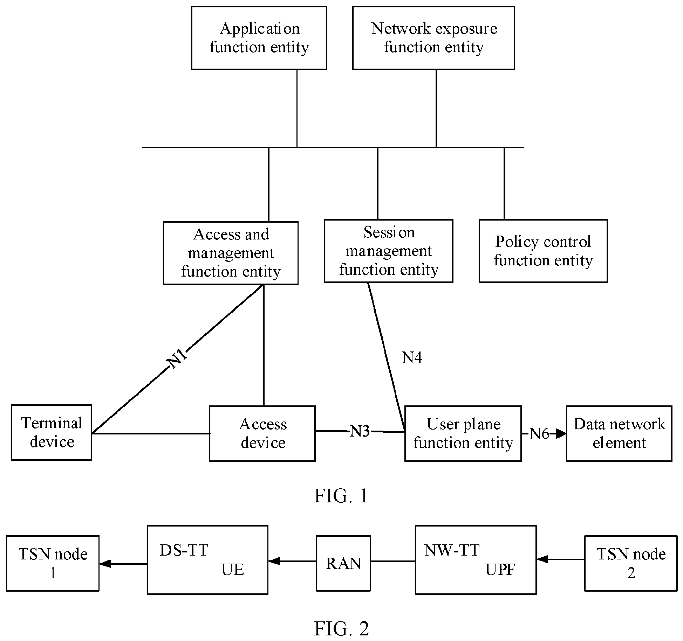

The following describes a structure of a communication system in this application with reference to FIG. 1.

As shown in FIG. 1, the communication system includes but is not limited to the following network elements.

### 1. Terminal device

The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal device may be a device that provides a user with voice/data connectivity, for example, a handheld device or an in-vehicle device with a wireless connection function. Currently, examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, an in-vehicle device, a wearable device, a terminal device in a 5G network in the future, a terminal device in a future evolved public land mobile communication network (public land mobile network, PLMN), or the like. This is not limited in embodiments of this application.

By way of example and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that dedicated to only one type of application and need to work with other devices such as smartphones, such as various smart bands or smart jewelry for monitoring physical signs.

In addition, the terminal device in embodiments of this application may alternatively be a terminal device in an internet of things (internet of things, IoT) system. IoT is an important part of future information technology development. A main technical feature of the IoT is connecting things to networks using communication technologies, to implement an intelligent network for interconnection between persons and machines, and between things.

In embodiments of this application, the IoT technology can implement massive connections, in-depth coverage, and power saving for a terminal by using, for example, the narrow band (Narrow Band) NB technology. For example, an NB may include only one resource block (resource block, RB). In other words, a bandwidth of the NB is only 180 KB. To implement massive access, terminals need to be discrete in access. According to a communication method in embodiments of this application, a congestion problem that occurs in the IoT technology when massive terminals access a network by using the NB can be effectively resolved.

In addition, in embodiments of this application, the terminal device may further communicate with a terminal device in another communication system, for example, the terminal device performs inter-device communication. For example, the terminal device may further transmit (for example, send and/or receive) a time synchronization packet with the terminal device in the another communication system.

### 2. Access device.

In addition, the access device in embodiments of this application may be a device configured to communicate with a terminal device, and the access device may also be referred to as an access network device or a radio access network device. For example, the access device may be an evolved NodeB (evolved NodeB, eNB or eNodeB) in an LTE system; or may be a radio controller in a cloud radio access network (cloud radio access network, CRAN) scenario; or may be a relay station, an access point, an in-vehicle device, a wearable device, an access device in a 5G network in the future, or an access device in a future evolved PLMN network; or may be an access point (access point, AP) in a WLAN; or may be a gNB in a new radio (new radio, NR) system. This is not limited in embodiments of this application.

In addition, in embodiments of this application, the access device is a device in a RAN, in other words, the access device is a RAN node that enables the terminal device to access a wireless network. For example, by way of example and not limitation, the access device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (for example, a home evolved NodeB or a home NodeB, HNB), a baseband unit (base band unit, BBU), or a wireless fidelity (wireless fidelity, Wi-Fi) access point (access point, AP). In a network structure, the network device may include a centralized unit (centralized unit, CU) node or a distributed unit (distributed unit, DU) node, a RAN device including a CU node and a DU node, or a RAN device including a CU control plane node (CU-CP node), a CU user plane node (CU-UP node), and a DU node.

The access device may serve a cell. The terminal device communicates with the access device on a transmission resource (for example, a frequency domain resource, or in other words, a frequency spectrum resource) used for the cell. The cell may be a cell corresponding to the access device (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of a small coverage range and low transmit power, and are suitable for providing a high-rate data transmission service.

In addition, a plurality of cells may simultaneously work in a same frequency band on a carrier in the LTE system or the 5G system. In some special scenarios, it may be considered that a concept of the carrier is equivalent to that of the cell. For example, in a carrier aggregation (carrier aggregation, CA) scenario, both a carrier index of a secondary component carrier and a cell identifier (cell identifier, Cell ID) of a secondary cell that works on the secondary component carrier are carried when the secondary component carrier is configured for UE. In this case, it may be considered that the concept of the carrier is equivalent to that of the cell. For example, that the terminal device accesses a carrier is equivalent to that the terminal device accesses a cell.

The communication system in this application may be further applicable to a vehicle to everything (vehicle to everything, V2X) technology. To be specific, the terminal device in this application may alternatively be a vehicle, for example, an intelligent vehicle or a self-driving vehicle.

Herein, "X" in V2X represents different communication targets, and V2X may include but is not limited to vehicle to vehicle (vehicle to vehicle, V2V), vehicle to infrastructure (vehicle to infrastructure, V2I), vehicle to network (vehicle to network, V2N), and vehicle to pedestrian (vehicle to pedestrian, V2P).

In V2X, an access device may configure a "zone (zone)" for UE. The zone may also be referred to as a geographical area. After the zone configuration, the world is divided into a plurality of zones, and the zones are defined by reference points, lengths, and widths. When determining a zone identifier (identifier, ID), the UE uses a zone length, a zone width, a quantity of zones above the length, a quantity of zones above the width, and a zone reference point to perform a remainder operation. The foregoing information may be configured by the access device.

### 3. Access and management function entity

The access and management function entity is mainly configured to perform mobility management, access management, and the like, and may be configured to implement another function other than session management in functions of a mobility management entity (mobility management entity, MME) in an LTE system, for example, functions such as lawful interception and access authorization/authentication.

In a 5G communication system, the access and management network element may be an access and management function (access and management function, AMF) entity.

In a future communication system, the access and management function entity may still be an AMF entity, or may have another name. This is not limited in this application.

### 4. Session management function entity

The session management function (session management function, SMF) entity is mainly configured to perform session management, internet protocol (internet protocol. IP) address allocation and management of a terminal device, selection of an endpoint that can manage a user plane function and a policy control and charging function interface, downlink data notification, and the like.

In the future communication system, the session management network element may still be an SMF entity, or may have another name. This is not limited in this application.

### 5. Application function entity

The application function (application function, AF) entity is configured to perform application-affected data routing, access a network exposure function entity, interact with a policy framework to perform policy control, and the like.

In the future communication system, the application function entity may still be an AF entity, or may have another name. This is not limited in this application.

### 6. Network exposure function entity

The network exposure function (Network Exposure Function, NEF) entity is configured to securely expose various capabilities of a system to the outside for use by a third-party application.

For example, in this application, the NEF may open a time synchronization capability of a communication system (for example, the 5G system), to support application services such as professional audio and video and industrial control.

In the future communication system, the network exposure function entity may still be an NEF entity, or may have another name. This is not limited in this application.

### 7. User plane function entity

The user plane function (user plane function, UPF) entity is used for packet routing and forwarding, quality of service (quality of service, QoS) processing of user plane data, and the like.

In the future communication system, the user plane function entity may still be an UPF entity, or may have another name. This is not limited in this application.

### 8. Data network

The data network (data network, DN) is a network that provides data transmission.

### 9. Policy control function entity

The policy control function (Policy Control Function, PCF) entity supports a unified policy framework to manage network behavior, provides a policy rule for network entities to execute, and accesses subscription information of a unified data repository (UDR).

It should be noted that the foregoing "entity" may also be referred to as a network element, a device, an apparatus, a module, or the like. This is not particularly limited in this application. In addition, in this application, for ease of understanding and description, the descriptions of the "entity" are omitted in some descriptions. For example, the SMF entity is referred to as an SMF for short. In this case, the "SMF" should be understood as an SMF network element or an SMF entity. Descriptions of same or similar cases are omitted below.

It may be understood that the entities or the functions may be network elements in a hardware device, may be software functions running on dedicated hardware, or may be virtualized functions instantiated on a platform (for example, a cloud platform).

It should be understood that the foregoing network elements or entities included in the communication system are merely examples for descriptions, and this is not particularly limited in this application.

FIG. 2 is a schematic diagram of another example of this application. As shown in FIG. 2, the communication system in this application may support a time sensitive network (Time Sensitive Network, TSN). Specifically, a TSN system sends time serving information to TSN nodes by using a communication system (specifically, a communication system on which a terminal device camps), for example, a 5G system, to implement clock synchronization between TSN nodes in same time domain. Generally speaking, that clock times of all the TSN nodes are consistent is implemented. In the 5G system, a functional module, namely, a device side TSN translator (device side TSN translator, DS-TT), is deployed on the terminal device, and a functional module, namely, a network side TSN translator (network side TSN translator, NW-TT), is deployed on a user plane function (user plane function, UPF), to adapt to an external TSN system.

The TSN system sends time serving information through the TSN nodes, to implement clock synchronization between the TSN nodes in the same time domain. In other words, that the clock times of all the TSN nodes are the same is implemented. In a wireless communication system, a functional module DS-TT is deployed on a terminal device, and a functional module NW-TT is deployed on a UPF, to adapt to an external TSN system. As shown in FIG. 2, when the 5G system is used as a TSN bridge (TSN Bridge), the 5G system may be referred to as a 5GS virtual TSN bridge (5GS Virtual TSN Bridge).

A specific structure of an execution body of a method provided in embodiments of this application is not particularly limited in embodiments of this application, provided that a program that records code for the method provided in embodiments of this application can be run to perform communication according to the method provided in embodiments of this application. For example, the execution body of the method provided in embodiments of this application may be a terminal device, a network device, a functional module that can invoke and execute the program in a terminal device or a network device, or a component (for example, a chip or a circuit) that may be applied to a terminal device or a network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry an instruction and/or data.

In the communication system in this application, a plurality of time synchronization capabilities may be provided (in other words, a plurality of clock sources are used, for example, GMs), to provide time synchronization with different precision.

For example, the time synchronization capability may include but is not limited to the following capabilities:
1. a capability of performing synchronization based on an internal clock source (for example, a 5G GM) of a system (for example, the 5G system);
2. a capability of performing synchronization based on a TSN clock source (for example, a TSN GM); and
3. a capability of performing synchronization based on other types of clock sources that may be used in the future.

In addition, a plurality of clock sources can exist with a same type of time synchronization capability. For example, in a time synchronization type of the TSN, synchronization may be performed based on a TSN clock source 1 (a TSN GM 1) of clock domain in which a TSN node 1 is located in FIG. 2, or synchronization may be performed based on a TSN clock source 2 (a TSN GM 2) of clock domain in which a TSN node 2 is located in FIG. 2. Different clock sources may have different synchronization precision. For example, precision of the 5G GM may be 0.1 milliseconds (ms), precision of the TSN GM 1 may be 0.001 ms, and precision of the TSN GM 2 may be 0.001 ms.

For example, the solution provided in this application may support a time synchronization capability based on three clock sources of two types, for example, synchronization based on the clock source (the 5G GM) of the 5G system and synchronization based on the TSN master clock sources (the TSN GM 1 and the TSN GM 2).

The three clock sources provide different time synchronization precision, which is exposed to a third-party application through an NEF. Different applications can use one or more time synchronization capabilities based on different application requirements.

For example, a video surveillance application may choose to use time synchronization based on the TSN GM 1, a production control application may also choose to use the time synchronization based on the TSN GM 1, and a video conference application may choose to use time synchronization based on the 5G GM.

In this application, time information may be carried and transferred between devices (including devices in a system, or a device in a system and a device outside the system) by using a time synchronization packet, for example, a generalized precision time protocol (generalized Precision Time Protocol, gPTP) packet (or a message).

Therefore, all devices inside the system, for example, network elements such as UE and a UPF inside the 5G system, and UE outside the 5G system or a network device, may perform time synchronization based on the time information in the received gPTP packet.

By way of example and not limitation, the time information may include but is not limited to a sending moment of the time synchronization packet, a time offset, and the like.

It should be understood that the foregoing specific content of the time information and the time synchronization packet are merely examples for description. This is not particularly limited in this application. The time synchronization packet in this application may be the same as or similar to a packet used for a time synchronization process in the conventional technology. In addition, the time information in this application may be the same as or similar to information used for time synchronization in the conventional technology, in other words, information carried in the time synchronization packet in the conventional technology.

In this application, the terminal device has two states for a clock source: an activation state and a deactivation state.

In addition, the terminal device may switch the clock source between the activation state and the deactivation state based on an indication of the network device (for example, the SMF).

In addition, the terminal device processes a time synchronization packet of the clock source in different manners in the two states.

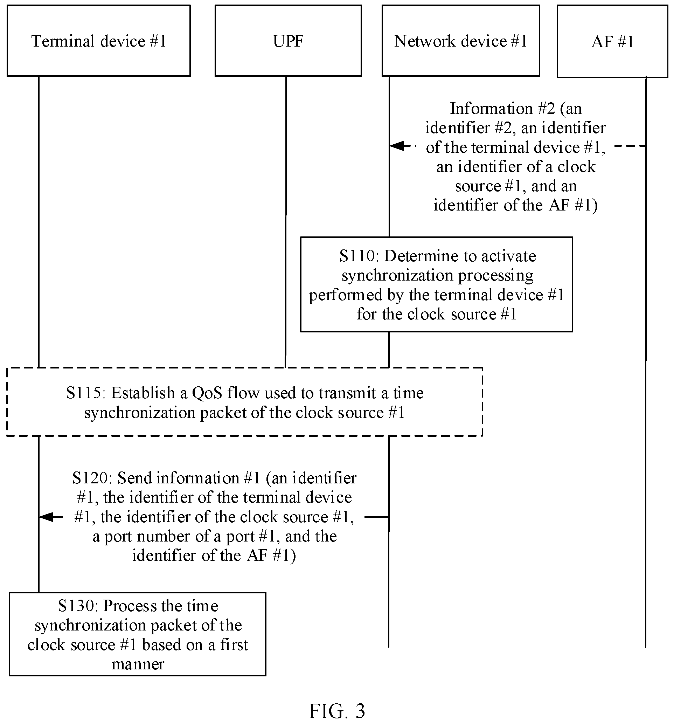

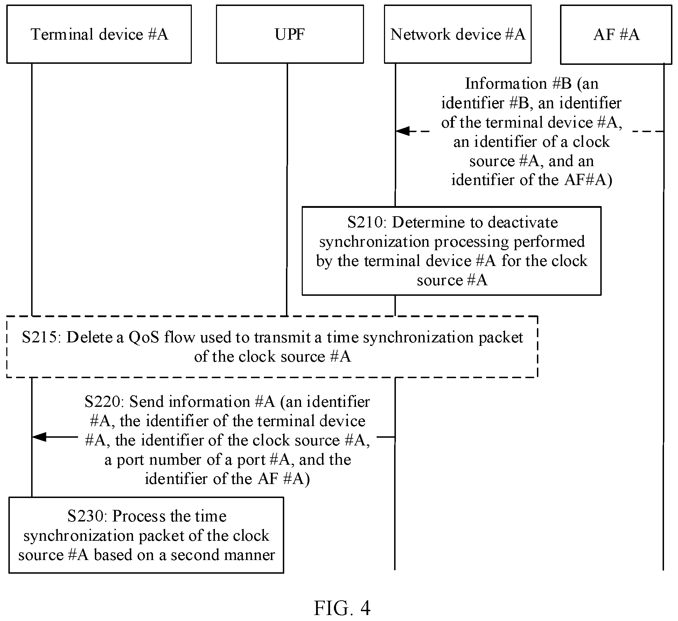

The following separately describes state switching and processing manners in different states in detail with reference to FIG. 3 and FIG. 4.

FIG. 3 shows an activation process and a manner of processing a time synchronization packet in an activation state. As shown in FIG. 3, in S110, a network device #1 (that is, an example of a network device) may determine that a terminal device #1 (that is, an example of a terminal device) needs to be activated to perform a time synchronization process for a clock source #1 (that is, an example of a first clock source).

By way of example and not limitation, the network device #1 may include an SMF.

In this case, the SMF and the terminal device may communicate with each other by using, for example, an AMF and an access network device.

For example, the SMF and the terminal device may communicate with each other by using, for example, a non-access stratum (Non-Access Stratum, NAS) message.

It should be understood that the SMF described above is merely an example of the network device #1, and this is not particularly limited in this application. For example, the network device #1 may alternatively be the AMF, an access device, or the like. This is not particularly limited in this application. For ease of understanding, the following describes in detail the time synchronization packet processing method in this application by using the SMF as the network device #1.

In this case, the network device #1 may receive, by using, for example, an NEF, information #2 (that is, an example of second indication information) sent by an AF (denoted as an AF #1). The AF #1 may be an AF that provides a service #1 for the terminal device #1.

The service #1 needs to use time synchronization based on the clock source #1, in other words, a time synchronization precision requirement of the service #1 is to provide time synchronization precision for the clock source #1. In addition, the service #1 may be a service that the terminal device #1 needs to access.

That is, in this application, the information #2 may be used to request to activate time synchronization processing performed by the terminal device #1 for the clock source #1.

In other words, the information #2 may be used to request to enable a time synchronization capability of the terminal device #1 for the clock source #1.

In other words, the information #2 may be used to request the terminal device #1 to enter an activation state for the clock source #1 (or for the time synchronization processing of the clock source #1).

In other words, the information #2 may be used to request the terminal device #1 to switch the clock source #1 (or the time synchronization processing of the clock source #1) to the activation state.

Therefore, the network device #1 may determine, based on the information #2, that the terminal device #1 needs to be activated to perform the time synchronization process of the clock source #1.

It should be understood that the foregoing manner in which the network device #1 determines that the terminal device #1 needs to be activated to perform the time synchronization process of the clock source #1 is merely an example for description. This is not particularly limited in this application. For example, the network device may also sense a service that the terminal device currently needs to access, and determine, based on a time synchronization precision requirement of the service, whether the terminal device needs to be activated to perform a time synchronization process of a clock source corresponding to the time synchronization precision requirement.

Optionally, in this application, the network device #1 may further record a time synchronization status (for example, an activation state or a deactivation state) of the terminal device #1 for the clock source #1. For example, the network device #1 may determine a current time synchronization status of the terminal device #1 for the clock source #1 based on a history of an activation request or a deactivation request that is received from the AF and that is for the clock source #1.

Therefore, the network device #1 may determine, based on the current time synchronization status of the terminal device #1 for the clock source #1 and the information #2, whether the terminal device #1 needs to be activated to perform the time synchronization process of the clock source #1.

For example, if the current time synchronization status of the terminal device #1 for the clock source #1 is the deactivation state, when receiving the information #2, the network device #1 may determine that the terminal device #1 needs to be activated to perform the time synchronization process of the clock source #1.

By way of example and not limitation, the information #2 may include an identifier of the terminal device #1, an identifier of the clock source #1, and an indication identifier #2 (that is, an example of a second indication).

Optionally, the identifier of the terminal device #1 may include a device identifier (for example, a mobile phone number, an internet protocol address, or a network temporary identifier) of the terminal device #1.

The identifier #2 may include two optional values, for example, on (on) and off (off).

When the value of the identifier #2 is on, the network device may determine that the information #2 requests to activate the time synchronization processing performed by the terminal device #1 for the clock source #1.

When the value of the identifier #2 is off, the network device may determine that the information #2 requests to deactivate the time synchronization processing performed by the terminal device #1 for the clock source #1.

Alternatively, the identifier #2 may have a specified format or carry a specified bit sequence #1, and the bit sequence #1 indicates that the clock source indicated by the identifier carried in the information #2 needs to be activated.

Alternatively, the identifier #2 may have a specified format or carry a specified bit sequence #2, and the bit sequence #2 indicates that the clock source indicated by the identifier carried in the information #2 needs to be deactivated.

As described above, the information #2 indicates to activate the time synchronization processing performed by the terminal device #1 for the clock source #1. In this case, the value of the identifier #2 is on.

Optionally, the information #2 may further include an identifier of the AF #1.

Optionally, in S115, the network device #1 (for example, the SMF) may further establish (or configure) a quality of service flow QoS flow #1.

For example, when the network device #1 determines, based on the identifier #2, that the terminal device #1 needs to be activated to perform time synchronization of the clock source #1, the network device #1 triggers a procedure of establishing the QoS flow #1.

Specifically, in this application, a time synchronization packet may be transmitted between the terminal device and a device such as a UPF by using a QoS flow, specifically, a QoS flow in a protocol data unit session (Protocol Data Unit Session, PDU Session) of the terminal device. For example, the network device #1 may establish the QoS flow #1 by triggering a PDU session modification procedure.

For example, in this application, for a terminal device, each activated and/or to-be-activated clock source may correspond to one QoS flow.

For another example, for a terminal device, each type of activated and/or to-be-activated clock source may correspond to one QoS flow.

For another example, for a terminal device, all activated and/or to-be-activated clock sources may share one QoS flow.

Therefore, in this application, when determining that the time synchronization of the terminal device #1 for the clock source #1 needs to be activated, the network device #1 may establish a QoS flow used to transmit a time synchronization packet of the clock source #1, namely, the QoS flow #1.

A process of establishing the QoS flow in this application may be similar to that in the conventional technology. To avoid repetition, detailed descriptions are not provided herein.

In the conventional technology, there is only one TSN-dedicated PDU session between a pair of inbound and outbound interfaces (it is assumed that the inbound interface is on an NW-TT of a UPF, and the outbound interface is on a DS-TT of UE). The PDU session is used to transmit both a time synchronization packet and a TSN service packet.

According to the solution provided in this application, a time synchronization packet is transmitted by using a QoS flow (for example, an existing or newly-established QoS flow), and a PDU session does not need to be additionally established for synchronization. Therefore, this complies with an architecture design idea of the conventional technology, can be better compatible with the conventional technology, and practicability of this application is improved.

Optionally, in this application, the network device #1 may further record or store a status (specifically, an activation state or a deactivation state) of the terminal device #1 for each clock source.

Therefore, the network device #1 may further determine, based on the information #2 and the status of the terminal device #1 for the clock source #1, whether to establish the QoS flow #1.

Specifically, if the status of the terminal device #1 for the clock source #1 is the activation state, and the terminal device #1 has performed the synchronization of the clock source #1 or another AF other than the AF #1 has sent a request to the network device #1 to activate the synchronization of the terminal device #1 for the clock source #1, it indicates that the network device #1 has established a QoS flow used to transmit the time synchronization packet of the clock source #1. In this case, the QoS flow #1 does not need to be established again.

In S120, the network device #1 sends information #1 (that is, an example of first indication information) to the terminal device #1, where the information #1 indicates the terminal device #1 to activate the clock source #1, or the information #1 indicates the terminal device #1 to activate the time synchronization processing for the clock source #1.

Specifically, after receiving the information #2 (namely, information used to request to activate the synchronization of the terminal device #1 for the clock source #1), the network device #1 may generate the information #1.

Alternatively, after receiving the information #2 (namely, information used to request to activate the synchronization of the terminal device #1 for the clock source #1), the network device #1 may perform determination. To be specific, if the information #2 is the first information that is received by the network device #1 and that requests to activate the synchronization of the terminal device #1 for the clock source #1, the network device #1 may generate the information #1.

In addition, if the information #2 is not the first information that is received by the network device #1 and that requests to activate the synchronization of the terminal device #1 for the clock source #1, or if the synchronization of the terminal device #1 for the clock source #1 is already in the activation state, or if the network device #1 has already received information that requests to activate the synchronization of the terminal device #1 for the clock source #1 before the information #2, the network device #1 may not generate (or not send) the information #1.

For example, in this application, the network device may indicate, based on activation indication information, the terminal device to activate or deactivate a clock source.

The information #1 carries an identifier of an indicated object (namely, the clock source #1).

The information #1 carries the identifier of the terminal device #1.

Optionally, the information #1 may further carry a port number of a port #1, where the port #1 includes a port used to transmit the clock packet of the clock source #1.

Specifically, in this application, the network device #1 may obtain and record a correspondence between each port of the terminal device #1 and each clock source, where one port is configured to transmit a clock packet of a corresponding clock source.

Therefore, the network device #1 may determine the port #1 based on the identifier of the clock source #1 and the correspondence.

Further, the terminal device may activate, based on the port number carried in the information #1, time synchronization processing of the clock source corresponding to the port.

It should be understood that the foregoing solution in which the information #1 carries the port number of the port #1 is merely an example for description, and this application is not limited thereto. For example, when receiving the information #1, the terminal device #1 may activate the time synchronization processing for the clock source #1 on all ports of the terminal device #1.

In this application, the information #1 may include an identifier #1 (that is, an example of a first indication).

The identifier #1 may include two optional values, for example, on (on) and off (off).

In this application, on may also be referred to as an activation identifier, and off may also be referred to as a deactivation identifier.

When the value of the identifier #1 is on, the terminal device may determine that the information #1 requests to activate the time synchronization processing for the clock source #1.

When the value of the identifier #1 is off, the terminal device may determine that the information #1 requests to deactivate the time synchronization processing for the clock source #1.

Alternatively, in this application, on (on) and off (off) may correspond to different bits (or bit sequences).

To be specific, the information #1 may include an indication bit, and the indication bit is used to carry the foregoing bits used to distinguish between the activation state (namely, on) and the deactivation state (namely, off).

Therefore, the terminal device may determine, based on a bit (or a bit sequence) carried in an indication bit of the received activation indication information, whether to activate or deactivate the clock source that is carried in the activation indication information and that is indicated by the identifier.

For example, if "1" indicates the activation state and "0" indicates the deactivation state, the information #1 may be activation indication information that includes the bit "1" carried in the indication bit and that carries the identifier of the clock source #1.

As described above, the information #1 indicates to activate the time synchronization processing for the clock source #1. In this case, the value of the identifier #1 is on.

Optionally, the information #1 may further include the identifier of the AF #1.

In an implementation, the network device #1 may establish, by using step S115, the QoS flow used to transmit the clock synchronization packet of the clock source #1. Alternatively, in another implementation, after step S110, the network device #1 sends the information #1 to the terminal device #1 by using step S120. After receiving the information #1, the network device #1 initiates, based on the activation identifier in the information #1, the procedure of establishing the QoS flow used to transmit the clock synchronization packet of the clock source #1.

In S130, the terminal device #1 may process the time synchronization packet (denoted as a time synchronization packet #1) of the clock source #1 based on a processing manner (that is, an example of the first processing manner) corresponding to the activation state.

By way of example and not limitation, that the clock source #1 is a 5G GM is used as an example. The processing manner corresponding to the activation state may include but is not limited to at least one of the following processing manners.

### Manner a

The terminal device #1 generates a time synchronization packet (denoted as the time synchronization packet #1) of the 5G GM (that is, an example of the clock source #1).

In addition, the terminal device #1 may send the time synchronization packet #1 to an external device (for example, a terminal device or a network device in another system, for example, the TSN node 1 in FIG. 2).

For example, in Manner a, the terminal device #1 may generate a gPTP message used to transfer 5G GM information, and send the gPTP message to another TSN node.

The foregoing process may be similar to a process in which a terminal device generates and sends a time synchronization packet to an external device in the conventional technology. To avoid repetition, detailed descriptions are not provided herein.

### Manner b

The terminal device #1 receives the time synchronization packet (denoted as a time synchronization packet #1') of the 5G GM (that is, an example of the clock source #1) from a device such as the UPF.

Then, the terminal device #1 updates information carried in the time synchronization packet #1' (for example, information carried in a packet sending moment field), and sends an updated time synchronization packet #1' to the external device.

It should be noted that, in this application, a sequence in which the time synchronization packet #1' and the foregoing information #2 arrive at the terminal device #1 is not particularly limited.

For example, the information #2 may arrive at the terminal device #1 before the time synchronization packet #1'. In this case, the terminal device may immediately perform the foregoing update and sending processes after receiving the time synchronization packet #1'.

For another example, the information #2 may arrive at the terminal device #1 after the time synchronization packet #1'. In this case, after receiving the time synchronization packet #1', the terminal device may store the time synchronization packet #1', and perform the foregoing update and sending processes after receiving the information #2.

For example, in Manner b, the UPF may generate the gPTP message used to transfer the 5G GM information, and send the gPTP message by using the established QoS flow to the terminal device #1; and then the terminal device #1 sends the gPTP message to another TSN node.

### Manner c

In this application, a time synchronization packet may be transmitted between the terminal device and a device such as the UPF by using the quality of service flow (Quality of Service Flow, QoS Flow), specifically, the QoS flow in the protocol data unit session (Protocol Data Unit Session, PDU Session) of the terminal device.

For example, in this application, for a terminal device, each activated and/or to-be-activated clock source may correspond to one QoS flow.

For another example, for a terminal device, each type of activated and/or to-be-activated clock source may correspond to one QoS flow.

For another example, for a terminal device, all activated and/or to-be-activated clock sources may share one QoS flow.

Therefore, in this application, the terminal device #1 may establish the QoS flow #1 used to transmit the time synchronization packet of the clock source #1.

It should be understood that the process of establishing the QoS flow #1 in this application may be performed under control of the SMF. In addition, the process of establishing the QoS flow in this application may be similar to that in the conventional technology. To avoid repetition, detailed descriptions are not provided herein.

It should be noted that in this application, a sequence of the process of establishing the QoS flow #1 and a process of transmitting the information #2 is not particularly limited.

In addition, in this application, Manner c and Manner a may be jointly performed. In other words, the terminal device #1 may perform the steps in Manner a and Manner c, and an execution sequence of the steps in Manner a and Manner c is not particularly limited.

Alternatively, in this application, Manner c and Manner a may be jointly performed. In other words, the terminal device #1 may perform the steps in Manner b and Manner c. For example, the terminal device #1 may first perform the steps in Manner c, and then perform the steps in Manner b.

### Manner d

The terminal device #1 may obtain time information of the clock source #1, for example, the 5G GM, from a positioning system, for example, a global positioning system (Global Positioning System, GPS) or a BeiDou positioning system.

By way of example and not limitation, the time information may be for generating the time synchronization packet of the clock source #1, for example, the 5G GM.

In addition, in this application, Manner d and Manner a may be jointly performed. In other words, the terminal device #1 may perform the steps in Manner a and Manner d. For example, the terminal device #1 may first perform the steps in Manner d, and then perform the steps in Manner a.

Alternatively, in this application, Manner d and Manner c may be jointly performed. In other words, the terminal device #1 may perform the steps in Manner d and Manner c, and an execution sequence of the steps in Manner d and Manner c is not particularly limited.

The foregoing describes the manners of processing the time synchronization packet by using the time synchronization packet of the 5G GM as an example. However, the present invention is not limited thereto. The time synchronization packet in this application may alternatively be of any other GM, for example, a TSN GM. In this case, because the terminal device cannot generate a time synchronization packet of the TSN GM, a manner of processing the time synchronization packet of the TSN GM does not include Manner a.

In addition, when the clock source #1 includes a clock source (for example, the TSN GM) of an external system, if the information #1 indicates the terminal device #1 to enter the activation state of synchronization processing for the clock source #1, the terminal device #1 may further perform the synchronization processing of the clock source #1 based on the information #1. A process of the synchronization processing may be similar to that in the conventional technology. To avoid repetition, detailed descriptions are not provided herein.

In other words, when the clock source #1 includes the clock source (for example, the TSN GM) of the external system, if the information #1 indicates the terminal device #1 to enter the activation state, the information #1 indicates the terminal device #1 to perform the synchronization processing of the clock source #1 based on the information #1.

It should be noted that Manner a to Manner d may be specified by a communication system or a communication protocol. In this case, after receiving the information #1, the terminal device #1 may directly process the time synchronization packet for the clock source #1 in one or more of Manner a to Manner d.

Alternatively, the network device #1 may further send information #3 to the terminal device #1, where the information #3 indicates one or more of Manner a to Manner d, so that the terminal device #1 may process the time synchronization packet for the clock source #1 in the manners indicated by the information #3.

In addition, the information #3 and the information #1 may be same information, or may be different information. This is not particularly limited in this application.

In other words, the information #3 and the information #1 may be sent synchronously or asynchronously. This is not particularly limited in this application.

In addition, the terminal device #1 may further perform the time synchronization for the clock source #1 based on the information #1, or keep the time synchronization for the clock source #1. In addition, the process may be similar to a process in which a terminal device keeps time synchronization with a clock source in the conventional technology. To avoid repetition, detailed descriptions are not provided herein.

FIG. 4 shows a deactivation process and a manner of processing a time synchronization packet in a deactivation state. As shown in FIG. 4, in S210, a network device #A (that is, an example of the network device) may determine that a terminal device #A (that is, an example of the terminal device) needs to be deactivated to perform a time synchronization process for a clock source #A (that is, an example of the first clock source).

By way of example and not limitation, the network device #A may include the SMF.

It should be understood that the SMF described above is merely an example of the network device #A, and this is not particularly limited in this application. For example, the network device #A may alternatively be the AMF, the access device, or the like. This is not particularly limited in this application. For ease of understanding, the following describes in detail the time synchronization packet processing method in this application by using the SMF as the network device #A.

In this case, the network device #A may receive, by using, for example, the NEF, information #B (that is, an example of second indication information) sent by an AF (denoted as an AF #A). The AF #A may be an AF that provides a service #A for the terminal device #A.

The service #A needs to use time synchronization based on the clock source #A, in other words, a time synchronization precision requirement of the service #A is to provide time synchronization precision for the clock source #A. In addition, the service #A may be a service that the terminal device #A needs to end accessing.

In other words, in this application, the information #B may be used to request to deactivate time synchronization processing performed by the terminal device #A for the clock source #A.

In other words, the information #B may be used to request to disable a time synchronization capability of the terminal device #A for the clock source #A.

In other words, the information #B may be used to request the terminal device #A to enter a deactivation state for the clock source #A (or for the time synchronization processing of the clock source #A).

In other words, the information #B may be used to request the terminal device #A to switch the clock source #A (or the time synchronization processing of the clock source #A) to the deactivation state.

Therefore, the network device #A may determine, based on the information #B, that the terminal device #A needs to be deactivated to perform the time synchronization process of the clock source #A.

It should be understood that the foregoing manner in which the network device #A determines that the terminal device #A needs to be deactivated to perform the time synchronization process of the clock source #A is merely an example for description. This is not particularly limited in this application. For example, the network device may also sense a service that the terminal device currently needs to end accessing, and deactivate a clock source used by the service.

Optionally, in this application, the network device #A may further record a time synchronization status (for example, a deactivation state or a de-deactivation state) of the terminal device #A for the clock source #A. For example, the network device #A may determine a current time synchronization status of the terminal device #A for the clock source #A based on a history of a deactivation request or a de-deactivation request that is received from the AF and that is for the clock source #A.

Therefore, the network device #A may determine, based on the current time synchronization status of the terminal device #A for the clock source #A and the information #B, whether the terminal device #A needs to be deactivated to perform the time synchronization process of the clock source #A.

For example, if the current time synchronization status of the terminal device #A for the clock source #A is the activation state, when receiving the information #B, the network device #A may determine that the terminal device #A needs to be deactivated to perform the time synchronization process of the clock source #A.

By way of example and not limitation, the information #B may include an identifier of the terminal device #A, an identifier of the clock source #A, and an indication identifier #B (that is, an example of a second indication).

Optionally, the identifier of the terminal device #A may include a device identifier (for example, a mobile phone number, an internet protocol address, or a network temporary identifier) of the terminal device #A.

The identifier #B may include two optional values, for example, on (on) and off (off).

When the value of the identifier #B is on, the network device may determine that the information #B requests to activate the time synchronization processing performed by the terminal device #A for the clock source #A.

When the value of the identifier #B is off, the network device may determine that the information #B requests to deactivate the time synchronization processing performed by the terminal device #A for the clock source #A.

Alternatively, the identifier #B may have a specified format or carry a specified bit sequence #A, and the bit sequence #A indicates that the clock source indicated by the identifier carried in the information #B needs to be activated.

Alternatively, the identifier #B may have a specified format or carry a specified bit sequence #B, and the bit sequence #B indicates that the clock source indicated by the identifier carried in the information #B needs to be deactivated.

As described above, the information #B indicates to deactivate the time synchronization processing performed by the terminal device #A for the clock source #A. In this case, the value of the identifier #B is off.

Optionally, the information #B may further include an identifier of the AF #A.

Optionally, in S215, the network device #A (for example, the SMF) may further delete (or release) a quality of service flow QoS flow #A.

For example, when the network device #A determines, based on the identifier #B, that the terminal device #A needs to be deactivated to perform time synchronization for the clock source #A, the network device #A triggers a procedure of deleting the QoS flow #A.

Specifically, in this application, a time synchronization packet may be transmitted between the terminal device and a device such as the UPF by using a QoS flow, specifically, the QoS flow in the protocol data unit session of the terminal device.

For example, in this application, for a terminal device, each activated and/or to-be-activated clock source may correspond to one QoS flow.

For another example, for a terminal device, each type of activated and/or to-be-activated clock source may correspond to one QoS flow.

For another example, for a terminal device, all activated and/or to-be-activated clock sources may share one QoS flow.

Therefore, in this application, when determining that the time synchronization of the terminal device #A for the clock source #A needs to be deactivated, the network device #A may delete a QoS flow used to transmit the time synchronization packet of the clock source #A, namely, the QoS flow #A.

A process of deleting a QoS flow in this application may be similar to that in the conventional technology. To avoid repetition, detailed descriptions are not provided herein.

Optionally, in this application, the network device #A may further record or store a status (specifically, an activation state or a deactivation state) of the terminal device #A for each clock source.

Therefore, the network device #A may further determine, based on the indication information #B and the status of the terminal device #A for the clock source #A, whether to delete the QoS flow #A.

Specifically, if another AF other than the AF #A further needs to provide a service for the terminal device #A based on the clock source #A, the QoS flow #A does not need to be deleted.

Alternatively, if another AF other than the AF #A does not need to provide a service for the terminal device #A based on the clock source #A, the QoS flow #A may be deleted.

In S220, the network device #A sends information #A (that is, an example of first indication information) to the terminal device #A, where the information #A indicates the terminal device #A to deactivate the clock source #A, or the information #A indicates the terminal device #A to deactivate the time synchronization processing for the clock source #A.

Specifically, after receiving the information #B (namely, information used to request to deactivate the synchronization of the terminal device #A for the clock source #A), the network device #A may generate the information #A.

Alternatively, after receiving the information #B (namely, information used to request to deactivate the synchronization of the terminal device #A for the clock source #A), the network device #A may perform determining. To be specific, if the information #B is the information used to request to deactivate the synchronization of the terminal device #A for the clock source #A, and currently no AF other than the AF #A provides a service for the terminal device #A based on the clock source #A, the information #A may be generated.

In addition, if the information #B is the information requests to deactivate the synchronization of the terminal device #A for the clock source #A, but currently another AF other than the AF #A needs to provide the service for the terminal device #A based on the clock source #A, the network device #A may not generate (or not send) the information #B.

For example, in this application, the network device may indicate, based on deactivation indication information, the terminal device to deactivate or de-deactivate a clock source.

The information #A may carry an identifier of an indicated object (namely, the clock source #A).

Optionally, the information #A may further carry a port number of a port #A, where the port #A includes a port used to transmit a clock packet of the clock source #A.

Specifically, in this application, the network device #A may obtain and record a correspondence between each port of the terminal device #A and each clock source, where one port is configured to transmit a clock packet of a corresponding clock source.

Therefore, the network device #A may determine the port #A based on the identifier of the clock source #A and the correspondence.

Further, the terminal device may activate, based on the port number carried in the information #A, time synchronization processing of the clock source corresponding to the port.

It should be understood that the foregoing solution in which the information #A carries the port number of the port #A is merely an example for description, and this application is not limited thereto. For example, when receiving the information #A, the terminal device #1 may activate the time synchronization processing for the clock source #A on all ports of the terminal device #A.

In this application, the information #A may include an identifier #A (that is, an example of first indication).

The identifier #A may include two optional values, for example, on (on) and off (off).

In this application, on may also be referred to as an activation identifier, and off may also be referred to as a deactivation identifier.

When the value of the identifier #A is on, the terminal device may determine that the information #A requests to activate the time synchronization processing for the clock source #A.

When the value of the identifier #A is off, the terminal device may determine that the information #A requests to deactivate the time synchronization processing for the clock source #A.

Alternatively, in this application, on (on) and off (off) may correspond to different bits (or bit sequences).

To be specific, the information #A may include an indication bit, and the indication bit is used to carry the foregoing bits used to distinguish between the activation state (namely, on) and the deactivation state (namely, off).

Therefore, the terminal device may determine, based on a bit (or a bit sequence) carried in an indication bit of the received deactivation indication information, whether to activate or deactivate the clock source that is carried in the deactivation indication information and that is indicated by the identifier.

For example, if "1" indicates the activation state and "0" indicates the deactivation state, the information #A may be deactivation indication information that includes the bit "0" carried in the indication bit and that carries the identifier of the clock source #A.

That is, the information #A may include the identifier of the terminal device #A, and the identifier of the clock source #A.

Optionally, the information #A may further include the identifier of the AF #A.

Optionally, the identifier of the terminal device #A may include the device identifier (for example, the mobile phone number, the internet protocol address, or the network temporary identifier) of the terminal device #A, a port number (port number) of the terminal device #A, or the like.

In S230, the terminal device #A may process a time synchronization packet (denoted as a time synchronization packet #A) of the clock source #A based on a processing manner (that is, an example of a second processing manner) corresponding to the deactivation state.

By way of example and not limitation, that the clock source #A is a 5G GM is used as an example, and the processing manner corresponding to the deactivation state may include but is not limited to at least one of the following processing manners.

### Manner e

The terminal device #A forbids generation of the time synchronization packet (denoted as the time synchronization packet #A) of the 5G GM (that is, an example of the clock source #A).

### Manner f

The terminal device #A receives the time synchronization packet (denoted as a time synchronization packet #A') of the 5G GM (that is, an example of the clock source #A) from the device such as a UPF.

Then, the terminal device #A may transparently transmit the time synchronization packet #A' to the external device.

It should be noted that, in this application, a sequence in which the time synchronization packet #A' and the information #B arrive at the terminal device #A is not particularly limited.

For example, the information #B may arrive at the terminal device #A before the time synchronization packet #A'. In this case, the terminal device may immediately perform the foregoing transparent transmission process after receiving the time synchronization packet #A'.

For another example, the information #B may arrive at the terminal device #A after the time synchronization packet #A'. In this case, after receiving the time synchronization packet #A', the terminal device may store the time synchronization packet #A'; and perform the foregoing transparent transmission process after receiving the information #B.

### Manner g

In this application, a time synchronization packet may be transmitted between the terminal device and a device such as the UPF by using a quality of service flow (Quality of Service Flow, QoS Flow), specifically, the QoS flow in a protocol data unit session (Protocol Data Unit Session, PDU Session) of the terminal device.

For example, in this application, for a terminal device, each deactivated and/or to-be-deactivated clock source may correspond to one QoS flow.

For another example, for a terminal device, each type of deactivated and/or to-be-deactivated clock source may correspond to one QoS flow.

For another example, for a terminal device, all deactivated and/or to-be-deactivated clock sources may share one QoS flow.

Therefore, in this application, the terminal device #A may delete (delete) the QoS flow #A used to transmit the time synchronization packet of the clock source #A.

It should be understood that the process of deleting the QoS flow #A in this application may be performed under control of the SMF. In addition, the process of deleting the QoS flow in this application may be similar to that in the conventional technology. To avoid repetition, detailed descriptions are not provided herein.

It should be noted that in this application, a sequence of the process of deleting the QoS flow #A and a process of transmitting the information #B is not particularly limited.

### Manner h

The terminal device #A may prohibit obtaining the time information of the clock source #A, for example, the 5G GM, from a positioning system, for example, a global positioning system (Global Positioning System, GPS) or a BeiDou positioning system.

### Manner i

The terminal device #A receives the time synchronization packet #A' from a device such as the UPF.

Then, the terminal device #A may discard the time synchronization packet #A'.

It should be noted that, in this application, the sequence in which the time synchronization packet #A' and the information #B arrive at the terminal device #A is not particularly limited.

For example, the information #B may arrive at the terminal device #A before the time synchronization packet #A'. In this case, the terminal device may immediately perform the foregoing discarding process after receiving the time synchronization packet #A'.

For another example, the information #B may arrive at the terminal device #A after the time synchronization packet #A'. In this case, after receiving the time synchronization packet #A', the terminal device may store the time synchronization packet #A'; and perform the foregoing discarding process after receiving the information #B.

By way of example and not limitation, the time information may be for generating the time synchronization packet of the clock source #A, for example, the 5G GM.

The foregoing describes a manner of processing the time packet by using the time synchronization packet of the 5G GM as an example. However, the present invention is not limited thereto. The time synchronization packet in this application may alternatively be of any other GM, for example, the TSN GM. In this case, because the terminal device cannot generate the time synchronization packet of the TSN GM, the manner of processing the time synchronization packet of the TSN GM does not include Manner e. For example, in this application, a process in which the terminal device processes the time synchronization packet of the TSN GM received from the UPF may be similar to a process in which the terminal device processes the time synchronization packet of the 5G GM received from the UPF.

It should be noted that Manner e to Manner i may be specified by a communication system or a communication protocol. In this case, after receiving the information #A, the terminal device #A may directly process the time synchronization packet for the clock source #A in one or more of Manner e to Manner g.

Alternatively, the network device #A may further send information #C to the terminal device #A, where the information #C indicates one or more of Manner e to Manner g, so that the terminal device #A may process the time synchronization packet for the clock source #A in the manners indicated by the information #C.

In addition, the information #C and the information #A may be same information, or may be different information. This is not particularly limited in this application.

In other words, the information #C and the information #A may be sent synchronously or asynchronously. This is not particularly limited in this application.

In this application, when the clock source #1 includes a clock source (for example, the TSN GM) of an external system, if the information #A indicates the terminal device #A to enter the deactivation state of the synchronization processing for the clock source #A, the terminal device #A may further stop, based on the information #A, the synchronization processing based on the clock source #A.

Alternatively, when the clock source #1 includes a clock source (for example, the TSN GM) of an external system, if the information #A indicates the terminal device #A to enter the deactivation state, the information #A indicates the terminal device #A to stop, based on the information #A, the synchronization processing based on the clock source #A.

In addition, it should be noted that the terminal device #1 and the terminal device #A may be a same terminal device or different terminal devices. This is not particularly limited in this application. In addition, the clock source #1 and the clock source #A may be a same clock source, or may be different clock sources. This is not particularly limited in this application.

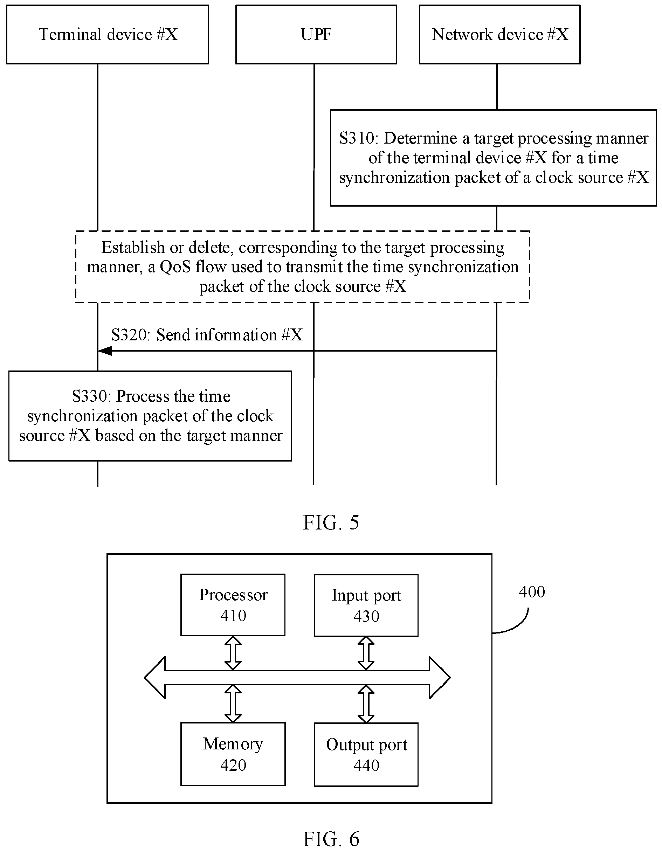

FIG. 5 shows an example of a process of processing a time synchronization packet according to this application. As shown in FIG. 5, in S310, a network device #X (that is, an example of the network device) determines a target processing manner of a time synchronization packet for a clock source #X (that is, an example of the first clock source) of a terminal device #X.

By way of example and not limitation, the target processing manner may include one or more of Manner a to Manner d.

Alternatively, the target processing manner may include one or more of Manner e to Manner i.

By way of example and not limitation, the network device #X may include the SMF.

It should be understood that the SMF described above is merely an example of the network device #X, and this is not particularly limited in this application. For example, the network device #X may alternatively be the AMF, the access device, or the like. This is not particularly limited in this application. For ease of understanding, the following describes in detail the time synchronization packet processing method in this application by using the SMF as the network device #X.

The network device #X may determine the target processing manner based on whether the clock source #X is activated or deactivated. For example, if the clock source #X needs to be activated, one or more manners are selected from Manner a to Manner d as the target processing manner. For another example, if the clock source #X needs to be deactivated, one or more manners are selected from Manner e to Manner g as the target processing manner.

In addition, a method and a process in which the network device #X determines whether the clock source #X is activated or deactivated may be similar to a method and a process in which the network device #1 or the network device #A determines whether a clock source is activated or deactivated. To avoid repetition, detailed descriptions are not provided herein.

In S320, the network device #X sends information #X (that is, an example of the first indication information) to the terminal device #X, where the information #X indicates the target processing manner.

Optionally, the information #A may carry an identifier of the clock source #X.

Optionally, the information #A may carry an identifier of the terminal device #X.

In S330, the terminal device #X may process the time synchronization packet of the clock source #X in the target processing manner. In addition, this specific process may be similar to that of the terminal device #1 or the terminal device #A. To avoid repetition, detailed descriptions are not provided herein.

According to the foregoing method, FIG. 6 is a schematic diagram of an apparatus 400 for processing a time synchronization packet according to an embodiment of this application.

The apparatus 400 may be a terminal device, or may be a chip or a circuit, for example, a chip or a circuit that may be disposed in a terminal device.

The apparatus 400 may include a processing unit 410 (that is, an example of a processing unit), and optionally, may further include a storage unit 420. The storage unit 420 is configured to store instructions.

In a possible manner, the processing unit 410 is configured to execute the instructions stored in the storage unit 420, so that the apparatus 400 implements the steps performed by the terminal device in the foregoing methods.

Further, the apparatus 400 may further include an input port 430 (that is, an example of a communication unit) and an output port 440 (that is, another example of a transceiver unit). Further, the processing unit 410, the storage unit 420, the input port 430, and the output port 440 may communicate with each other through an internal connection path, to transmit a control signal and/or a data signal. The storage unit 420 is configured to store a computer program. The processing unit 410 may be configured to invoke the computer program from the storage unit 420 and run the computer program, to complete the steps of the terminal device in the foregoing methods. The storage unit 420 may be integrated into the processing unit 410, or may be disposed separately from the processing unit 410.

Optionally, in a possible manner, the input port 430 may be a receiver, and the output port 440 is a transmitter. The receiver and the transmitter may be a same physical entity or different physical entities. When the receiver and the transmitter are the same physical entity, the physical entity may be collectively referred to as a transceiver.

Optionally, in a possible manner, the input port 430 is an input interface, and the output port 440 is an output interface.

In an implementation, it may be considered that functions of the input port 430 and the output port 440 are implemented by using a transceiver circuit or a dedicated transceiver chip. It may be considered that the processing unit 410 is implemented by using a dedicated processing chip, a processing circuit, a processing unit, or a general-purpose chip.

In another implementation, it may be considered that the terminal device provided in this embodiment of this application may be implemented by using a general-purpose computer. To be specific, program code for implementing functions of the processing unit 410, the input port 430, and the output port 440 is stored in the storage unit 420, and a general-purpose processing unit executes the code in the storage unit 420 to implement the functions of the processing unit 410, the input port 430, and the output port 440.

In an implementation, the input port 430, that is, an example of the transceiver unit, is configured to receive first indication information. The first indication information indicates a terminal device to enter an activation state of time synchronization for a first clock source, or the first indication information indicates the terminal device to enter a deactivation state of time synchronization for a first clock source.

The processing unit 410 is configured to process a time synchronization packet of the first clock source based on the first indication information.

In an implementation, when the first indication information indicates to enter the activation state, the processing unit is configured to generate and send the time synchronization packet of the first clock source to an external device based on the first indication information;
when the first indication information indicates to enter the activation state, the processing unit is configured to receive the time synchronization packet of the first clock source based on the first indication information, update information carried in the time synchronization packet of the first clock source, and send an updated time synchronization packet of the first clock source to an external device;
when the first indication information indicates to enter the activation state, the processing unit is configured to establish a first quality of service flow QoS flow based on the first indication information, where the first QoS flow is used to transmit the time synchronization packet of the first clock source; or
when the first indication information indicates to enter the activation state, the processing unit is configured to obtain, from a positioning system based on the first indication information, time information for generating the time synchronization packet of the first clock source.

In another implementation, when the first indication information indicates to enter the deactivation state, the processing unit is configured to stop generating the time synchronization packet of the first clock source based on the first indication information;
when the first indication information indicates to enter the deactivation state, the processing unit is configured to transparently transmit the time synchronization packet of the first clock source based on the first indication information;
when the first indication information indicates to enter the deactivation state, the processing unit is configured to delete the first QoS flow based on the first indication information, where the first QoS flow is used to transmit the time synchronization packet of the first clock source; or
when the first indication information indicates to enter the deactivation state, the processing unit is configured to stop obtaining, from the positioning system based on the first indication information, the time information for generating the time synchronization packet of the first clock source.

Functions and actions of the modules or units in the apparatus 400 described above are merely examples for descriptions. When the apparatus 400 is configured on or is a terminal device, the modules or units in the apparatus 400 may be configured to perform actions or processing processes performed by the terminal device (for example, the terminal device #1, the terminal device #A, or the terminal device #X) in the foregoing methods. To avoid repetition, detailed descriptions are not provided herein.

For concepts, explanations, detailed descriptions, and other steps that are related to the apparatus 400 and that are related to the technical solutions provided in this embodiment of this application, refer to descriptions about the content in the foregoing methods or other embodiments. Details are not described herein again.

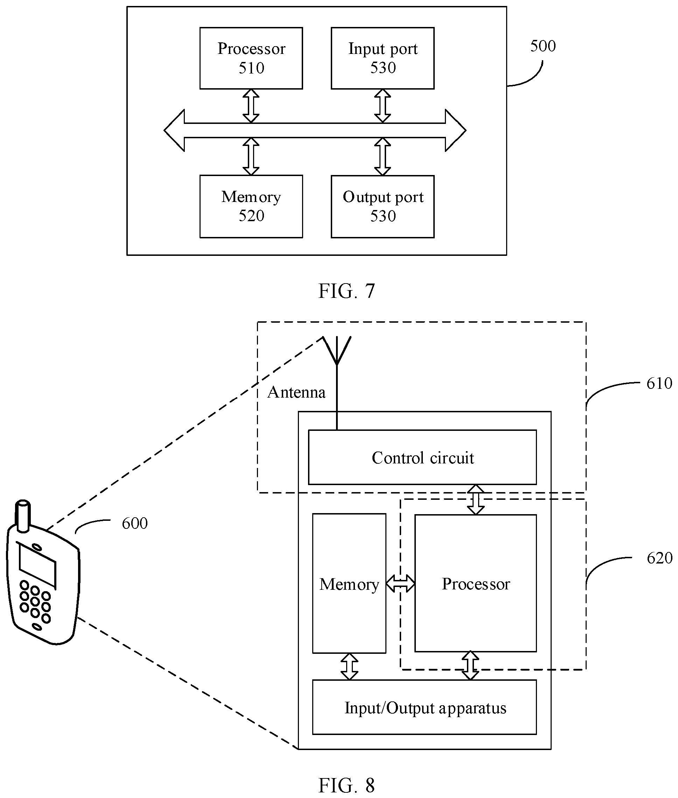

According to the foregoing method, FIG. 7 is a schematic diagram of an apparatus 500 for processing a time synchronization packet according to an embodiment of this application.

The apparatus 500 may be a network device, or may be a chip or a circuit, for example, a chip or a circuit that may be disposed in a network device.

The apparatus 500 may include a processing unit 510 (that is, an example of a processing unit), and optionally, may further include a storage unit 520. The storage unit 520 is configured to store instructions.

In a possible manner, the processing unit 510 is configured to execute the instructions stored in the storage unit 520, so that the apparatus 500 implements the steps performed by the network device in the foregoing methods.

Further, the apparatus 500 may further include an input port 530 (that is, an example of a communication unit) and an output port 540 (that is, another example of a transceiver unit). Further, the processing unit 510, the storage unit 520, the input port 530, and the output port 540 may communicate with each other through an internal connection path, to transmit a control signal and/or a data signal. The storage unit 520 is configured to store a computer program. The processing unit 510 may be configured to invoke the computer program from the storage unit 520 and run the computer program, to complete the steps of the network device in the foregoing methods. The storage unit 520 may be integrated into the processing unit 510, or may be disposed separately from the processing unit 510.

Optionally, in a possible manner, the input port 530 may be a receiver, and the output port 540 is a transmitter. The receiver and the transmitter may be a same physical entity or different physical entities. When the receiver and the transmitter are the same physical entity, the physical entity may be collectively referred to as a transceiver.

Optionally, in a possible manner, the input port 530 is an input interface, and the output port 540 is an output interface.

In an implementation, it may be considered that functions of the input port 530 and the output port 540 are implemented by using a transceiver circuit or a dedicated transceiver chip. It may be considered that the processing unit 510 is implemented by using a dedicated processing chip, a processing circuit, a processing unit, or a general-purpose chip.

In another implementation, it may be considered that the network device provided in this embodiment of this application is implemented by using a general-purpose computer. To be specific, program code for implementing functions of the processing unit 510, the input port 530, and the output port 540 is stored in the storage unit 520, and a general-purpose processing unit executes the code in the storage unit 520 to implement the functions of the processing unit 510, the input port 530, and the output port 540.

In an implementation, the processing unit 510 is configured to generate first indication information. The first indication information indicates a terminal device to enter an activation state of time synchronization for a first clock source, or the first indication information indicates a terminal device to enter a deactivation state of time synchronization for a first clock source.

The output port 540 is configured to send the first indication information.

Optionally, the input port 530 is configured to receive second indication information. The second indication information requests to activate the time synchronization of the first clock source of the terminal device, or the second indication information requests to deactivate the time synchronization of the first clock source of the terminal device.

When the second indication information requests to activate the time synchronization of the first clock source of the terminal device, the processing unit is further configured to establish a first QoS flow based on the second indication information, where the first QoS flow is used by the first terminal device to transmit a time synchronization packet of the first clock source.

When the second indication information requests to deactivate the time synchronization of the first clock source of the terminal device, the processing unit is further configured to delete the first QoS flow based on the second indication information.

Functions and actions of the modules or units in the apparatus 500 described above are merely examples for descriptions. When the apparatus 500 is configured on or is a network device, the modules or units in the apparatus 500 may be configured to perform actions or processing processes performed by the network device (for example, the network device #1, the network device #A, or the network device #X) in the foregoing methods. To avoid repetition, detailed descriptions are not provided herein.

For concepts, explanations, detailed descriptions, and other steps that are related to the apparatus 500 and that are related to the technical solutions provided in this embodiment of this application, refer to descriptions about the content in the foregoing methods or other embodiments. Details are not described herein again.

FIG. 8 is a schematic diagram of a structure of a terminal device 600 according to this application. The apparatus 400 may be configured in the terminal device 600, or the apparatus 400 may be the terminal device 600. In other words, the terminal device 600 may perform an action performed by the terminal device (for example, the terminal device #1, the terminal device #A, or the terminal device #X) in the foregoing methods.

For ease of description, FIG. 8 shows only main components of the terminal device. As shown in FIG. 8, the terminal device 700 includes a processor, a memory, a control circuit, an antenna, and an input/output apparatus.

The processor is mainly configured to process a communication protocol and communication data, control the entire terminal device, execute a software program, and process data of the software program, for example, configured to support the terminal device to perform actions described in the foregoing embodiments of the time synchronization packet processing method. The memory is mainly configured to store the software program and the data, for example, store a codebook described in the foregoing embodiment. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to receive data input by a user and output data to the user.

After the terminal device is powered on, the processor may read the software program in the storage unit, interpret and execute instructions of the software program, and process the data of the software program. When data needs to be sent in a wireless manner, the processor performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 8 shows only one memory and one processor. In an actual terminal device, there may be a plurality of processors and memories. The memory may also be referred to as a storage medium, a storage device, or the like. This is not limited in this embodiment of this application.

For example, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 8 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program; and the processor executes the software program to implement a baseband processing function.

For example, in this embodiment of this application, the antenna that has receiving and transmitting functions and the control circuit may be considered as a transceiver unit 610 of the terminal device 600, and the processor that has a processing function may be considered as a processing unit 620 of the terminal device 600. As shown in FIG. 8, the terminal device 600 includes the transceiver unit 610 and the processing unit 620. The transceiver unit may also be referred to as a transceiver machine, a transceiver, a transceiver apparatus, or the like. Optionally, a component that is in the transceiver unit 610 and that is configured to implement a receiving function may be considered as a receiving unit, and a component that is in the transceiver unit 610 and that is configured to implement a transmitting function may be considered as a transmitting unit. In other words, the transceiver unit includes a receiving unit and a transmitting unit. For example, the receiving unit may also be referred to as a receiving machine, a receiver, or a receiving circuit, and the transmitting unit may also be referred to as a transmit machine, a transmitter, or a transmitting circuit.

According to the method provided in embodiments of this application, an embodiment of this application further provides a communication system, including one or more of the foregoing terminal devices and network devices.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example and not limitation, random access memories (random access memory, RAM) in a plurality of forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of foregoing embodiments may be implemented by using software, hardware, firmware, or any combination thereof. When the software is used to implement embodiments, all or some of the embodiments may be implemented in a form of a computer program product. The computer program product includes one or more computer instructions or computer programs. When the computer program instructions or computer programs are loaded and executed on a computer, all or some of procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state disk.

It should be noted that a term "and/or" describes an association relationship between associated objects and indicates that three relationships may exist. For example, A and/or B may indicate the following cases: Only A exists, both A and B exist, and only B exists. The character "/" usually indicates an "or" relationship between the associated objects.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether a function is performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed systems, apparatuses, and methods may be implemented in other manners. For example, the foregoing described apparatus embodiments are merely examples. For example, division into the units is merely a logical function division and may be another division during an actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit. When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a computer software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a portable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A time synchronization method performed by a network device, the method comprising the steps of:
receiving second indication information, wherein the second indication information requests to activate time synchronization of a first clock source of a terminal device;
generating first indication information based on the second indication information, wherein the first indication information indicates the terminal device to enter an activation state of the time synchronization for the first clock source, and the first indication information comprises an identifier of the first clock source; and
sending (S 120) the first indication information.

2. The method according to claim 1, wherein the second indication information is for processing a first quality of service, QoS, flow, wherein the processed first QoS flow is used by the terminal device to transmit the time synchronization packet of the first clock source.

3. The method according to claim 1 or 2, wherein the first indication information comprises an identifier of the terminal device, and a first indication; and the first indication indicates the activation state.

4. The method according to claim 3, wherein the first indication information comprises a port number of a first port, and the first port comprises a port for transmitting a time synchronization packet of the first clock source; and/or
the first indication information comprises an identifier of a first application service entity, wherein the first application service entity is configured to provide a first service for the terminal device, and the first service is based on the time synchronization of the first clock source.

5. The method according to any one of claims 1 to 4, wherein the first clock source comprises a clock source of a time sensitive network, TSN.

6. The method according to any one of claims 1 to 4, wherein the first clock source comprises a clock source of a fifth generation 5G system.

7. A time synchronization method performed by a terminal device or an apparatus in the terminal device, comprising the steps of:
receiving (S120) first indication information from a network device, wherein the first indication information indicates the terminal device to enter an activation state of a time synchronization of a first clock source of the terminal device;
processing (130) a time synchronization packet of the first clock source based on the first indication information;
wherein the processing (130) the time synchronization packet of the first clock source based on the first indication information comprises:
receiving the time synchronization packet of the first clock source;
updating a packet sending moment field in the time synchronization packet of the first clock source; and
sending an updated time synchronization packet of the first clock source to an external device, wherein the external device is a device in a communication system different to the one in which the terminal device currently camps.

8. The method according to claim 7, wherein the first indication information comprises an identifier of the terminal device, an identifier of the first clock source, and a first indication; and the first indication indicates the activation state.

9. The method according to claim 7 or 8, wherein the first clock source comprises a clock source of a time sensitive network, TSN.

10. A wireless communication apparatus, comprising means configured to implement the method according to any one of claims 1 to 6.

11. A wireless communication apparatus, comprising means configured to implement the method according to any one of claims 7 to 9.

12. A computer-readable storage medium, wherein the computer-readable storage medium stores a computer program; and when the computer program runs,
an apparatus is enabled to implement the method according to any one of claims 1 to 6, or
an apparatus is enabled to implement the method according to any one of claims 7 to 9.

## Patentansprüche

1. Zeitsynchronisationsverfahren, das durch eine Netzwerkvorrichtung durchgeführt wird, wobei das Verfahren die Schritte umfasst:
Empfangen von zweiten Anzeigeinformationen, wobei die zweiten Anzeigeinformationen anfordern, eine Zeitsynchronisation einer ersten Taktquelle eines Endgeräts zu aktivieren;
Erzeugen von ersten Anzeigeinformationen basierend auf den zweiten Anzeigeinformationen, wobei die ersten Anzeigeinformationen dem Endgerät anzeigen, in einen Aktivierungszustand der Zeitsynchronisation für die erste Taktquelle einzutreten, und die ersten Anzeigeinformationen eine Kennung der ersten Taktquelle umfassen; und
Senden (S 120) der ersten Anzeigeinformationen.

2. Verfahren nach Anspruch 1, wobei die zweiten Anzeigeinformationen zum Verarbeiten eines ersten Dienstgüte(QoS)-Flusses dienen, wobei der verarbeitete erste QoS-Fluss durch das Endgerät verwendet wird, um das Zeitsynchronisationspaket der ersten Taktquelle zu übertragen.

3. Verfahren nach Anspruch 1 oder 2, wobei die ersten Anzeigeinformationen eine Kennung des Endgeräts und eine erste Anzeige umfassen; und die erste Anzeige den Aktivierungszustand anzeigt.

4. Verfahren nach Anspruch 3, wobei die ersten Anzeigeinformationen eine Anschlussnummer eines ersten Anschlusses umfassen und der erste Anschluss einen Anschluss zum Übertragen eines Zeitsynchronisationspakets der ersten Taktquelle umfasst; und/oder
die ersten Anzeigeinformationen eine Kennung einer ersten Anwendungsdiensteinheit umfassen, wobei die erste Anwendungsdiensteinheit konfiguriert ist, um einen ersten Dienst für das Endgerät bereitzustellen, und der erste Dienst auf der Zeitsynchronisation der ersten Taktquelle basiert.

5. Verfahren nach einem der Ansprüche 1 bis 4, wobei die erste Taktquelle eine Taktquelle eines zeitsensitiven Netzwerks, TSN, umfasst.

6. Verfahren nach einem der Ansprüche 1 bis 4, wobei die erste Taktquelle eine Taktquelle eines 5G-Systems der fünften Generation umfasst.

7. Zeitsynchronisationsverfahren, das durch ein Endgerät oder eine Einrichtung in dem Endgerät durchgeführt wird, das die Schritte umfasst:
Empfangen (S120) der ersten Anzeigeinformationen von einer Netzwerkvorrichtung,
wobei die ersten Anzeigeinformationen dem Endgerät anzeigen, in einen Aktivierungszustand einer Zeitsynchronisation einer ersten Taktquelle des Endgeräts einzutreten;
Verarbeiten (130) eines Zeitsynchronisationspakets der ersten Taktquelle basierend auf den ersten Anzeigeinformationen;
wobei das Verarbeiten (130) des Zeitsynchronisationspakets der ersten Taktquelle basierend auf den ersten Anzeigeinformationen umfasst:
Empfangen des Zeitsynchronisationspakets der ersten Taktquelle;
Aktualisieren eines Paketsendezeitpunktfelds in dem Zeitsynchronisationspaket der ersten Taktquelle; und
Senden eines aktualisierten Zeitsynchronisationspakets der ersten Taktquelle an eine externe Vorrichtung, wobei die externe Vorrichtung eine Vorrichtung in einem anderen Kommunikationssystem als das ist, in dem das Endgerät sich derzeit befindet.

8. Verfahren nach Anspruch 7, wobei die ersten Anzeigeinformationen eine Kennung des Endgeräts, eine Kennung der ersten Taktquelle und eine erste Anzeige umfassen; und die erste Anzeige den Aktivierungszustand anzeigt.

9. Verfahren nach Anspruch 7 oder 8, wobei die erste Taktquelle eine Taktquelle eines zeitsensitiven Netzwerks, TSN, umfasst.

10. Drahtloskommunikationseinrichtung, die Mittel, die konfiguriert sind, um das Verfahren nach einem der Ansprüche 1 bis 6 zu implementieren, umfasst.

11. Drahtloskommunikationseinrichtung, die Mittel, die konfiguriert sind, um das Verfahren nach einem der Ansprüche 7 bis 9 zu implementieren, umfasst.

12. Computerlesbares Speicherungsmedium, wobei das computerlesbare Speicherungsmedium ein Computerprogramm speichert; und wenn das Computerprogramm läuft,
eine Einrichtung aktiviert wird, um das Verfahren nach einem der Ansprüche 1 bis 6 zu implementieren, oder
eine Einrichtung aktiviert wird, um das Verfahren nach einem der Ansprüche 7 bis 9 zu implementieren.

## Revendications

1. Procédé de synchronisation temporelle réalisé par un dispositif réseau, le procédé comprenant les étapes consistant à :
recevoir des secondes informations d'indication, dans lequel les secondes informations d'indication demandent d'activer la synchronisation temporelle d'une première source d'horloge d'un dispositif terminal ;
générer des premières informations d'indication sur la base des secondes informations d'indication, dans lequel les premières informations d'indication indiquent au dispositif terminal d'entrer dans un état d'activation de la synchronisation temporelle pour la première source d'horloge, et les premières informations d'indication comprennent un identifiant de la première source d'horloge ; et
envoyer (120) les premières informations d'indication.

2. Procédé selon la revendication 1, dans lequel les secondes informations d'indication sont destinées à traiter un premier flux de qualité de service, QoS, dans lequel le premier flux QoS traité est utilisé par le dispositif terminal pour transmettre le paquet de synchronisation temporelle de la première source d'horloge.

3. Procédé selon la revendication 1 ou 2, dans lequel les premières informations d'indication comprend un identifiant du dispositif terminal et une première indication ; et les premières indications indiquent l'état d'activation.

4. Procédé selon la revendication 3, dans lequel les premières informations d'indication comprend un numéro de port d'un premier port, et le premier port comprend un port pour la transmission d'un paquet de synchronisation temporelle de la première source d'horloge ; et/ou
les premières informations d'indication comprennent un identifiant d'une première entité de service d'application, dans lequel la première entité de service d'application est configurée pour fournir un premier service au dispositif terminal, et le premier service est basé sur la synchronisation temporelle de la première source d'horloge.

5. Procédé selon l'une quelconque des revendications 1 à 4, dans lequel la première source d'horloge comprend une source d'horloge d'un réseau sensible au temps, TSN.

6. Procédé selon l'une quelconque des revendications 1 à 4, dans lequel la première source d'horloge comprend une source d'horloge d'un système de cinquième génération 5G.

7. Procédé de synchronisation temporelle réalisé par un dispositif terminal ou un appareil dans le dispositif terminal, comprenant les étapes consistant à :
recevoir (S120) des premières informations d'indication provenant d'un dispositif de réseau, dans lequel les premières informations d'indication indiquent au dispositif terminal d'entrer dans un état d'activation d'une synchronisation temporelle d'une première source d'horloge du dispositif terminal ;
traiter (130) un paquet de synchronisation temporelle de la première source d'horloge sur la base des premières informations d'indication ;
dans lequel le traitement (130) du paquet de synchronisation temporelle de la première source d'horloge sur la base des premières informations d'indication comprennent :
la réception du paquet de synchronisation temporelle de la première source d'horloge ;
la mise à jour d'un champ de moment d'envoi de paquet dans le paquet de synchronisation temporelle de la première source d'horloge ; et
l'envoi d'un paquet de synchronisation temporelle mis à jour de la première source d'horloge à un dispositif externe, dans lequel le dispositif externe est un dispositif dans un système de communication différent de celui dans lequel le dispositif terminal réside actuellement.

8. Procédé selon la revendication 7, dans lequel les premières informations d'indication comprennent un identifiant du dispositif terminal, un identifiant de la première source d'horloge et une première indication ; et les premières indications indiquent l'état d'activation.

9. Procédé selon la revendication 7 ou 8, dans lequel la première source d'horloge comprend une source d'horloge d'un réseau sensible au temps, TSN.

10. Appareil de communication sans fil, comprenant un moyen configuré pour mettre en œuvre le procédé selon l'une quelconque des revendications 1 à 6.

11. Appareil de communication sans fil, comprenant un moyen configuré pour mettre en œuvre le procédé selon l'une quelconque des revendications 7 à 9.

12. Support de stockage lisible par ordinateur, dans lequel le support de stockage lisible par ordinateur stocke un programme informatique ; et lorsque le programme informatique s'exécute,
un appareil est activé pour mettre en œuvre le procédé selon l'une quelconque des revendications 1 à 6, ou
un appareil est activé pour mettre en œuvre le procédé selon l'une quelconque des revendications 7 à 9.
